# EUROPEAN PATENT SPECIFICATION

(11) **EP 3 678 408 B1**
(45) Date of publication and mention of the grant of the patent: **02.11.2022**
(21) Application number: 18858141.7
(22) Date of filing: 19.09.2018
(51) Int. Cl.: H04W 28/00, H04L 5/00

(54) **METHOD FOR MEASURING CHANNEL STATE INFORMATION AND RELATED DEVICE**
VERFAHREN ZUM MESSEN VON KANALSTATUSINFORMATIONEN UND ZUGEHÖRIGE VORRICHTUNG
PROCÉDÉ DE MESURE D'INFORMATIONS D'ÉTAT DE CANAL ET DISPOSITIF ASSOCIÉ

(30) Priority: 23.09.2017 CN 201710870180
(43) Date of publication of application: 08.07.2020
(73) Proprietor: Huawei Technologies Co., Ltd., Longgang District Shenzhen, Guangdong 518129 (CN)
(72) Inventor: ZHENG, Juan, Shenzhen Guangdong 518129 (CN); GUAN, Lei, Shenzhen Guangdong 518129 (CN)
(74) Representative: Epping - Hermann - Fischer
(86) International application number: PCT/CN2018/106464
(87) International publication number: WO 2019/057073

(56) References cited:
- EP-A1- 3 016 308
- WO-A1-2016/124361
- CN-A- 104 144 449
- CN-A- 104 144 449
- CN-A- 105 991 231

## Description

### TECHNICAL FIELD

This disclosure relates to the field of network communications, and in particular, to methods for measuring channel state information and related devices.

### BACKGROUND

To assist a network device in effectively managing a wireless communications system, user equipment periodically and/or aperiodically reports current channel state information to the network device. In an existing LTE/LTE-A system, user equipment (User Equipment, UE) periodically or aperiodically feeds back channel state information (Channel State Information, CSI) measurement information based on a configuration of an eNB, so that the eNB obtains a downlink channel status of the UE. For example, in the LTE system, CSI includes a subband channel quality indicator (Channel Quality Indicator, CQI), a precoding matrix indicator (Pre-coding Matrix Indicator, PMI), a rank indicator (Rank Indicator, RI), and the like. For a 5th generation (5th Generation, 5G) new radio (New Radio, NR) access technology, user equipment may also report channel state information, so that a network device learns of a channel state that data experiences during transmission between the network device and the user equipment.

In both a licensed frequency band and a license-exempt frequency band, there may be a case in which a frequency resource is uncertain or dynamically changes. For example, for the licensed frequency band, the network device may dynamically schedule a downlink frequency resource to the UE based on a current actual situation. For the license-exempt frequency band, the network device may need to obtain an available downlink frequency resource through contention from the license-exempt frequency band based on a clear channel assessment (Clear Channel Assessment, CCA) result. However, how to report corresponding CSI for a dynamically changing downlink frequency resource is not specified currently.

Therefore, for a wideband license-exempt frequency band, how to measure and report CSI to adapt data transmission to a channel state and improve data transmission efficiency is a problem to be urgently resolved.

Document CN 104 144 449 A discloses a resource configuration method and system and a relevant device. A base station sends virtual bandwidth configuration information to a terminal through high-level configuration signalling, the virtual bandwidth configuration information indicates X virtual bandwidths corresponding to the terminal or indicates whether the virtual bandwidths are adopted or not, the system bandwidth of the terminal is divided into N subbandwidths, one virtual bandwidth corresponding to the terminal is composed of K sub-bandwidths, K, N and X are all positive integers larger than or equal to one, and K<N. The virtual bandwidths are configured, signalling cost in small cells can be lowered, interference cooperation between the small cells is supported, data transmission of the small cells is supported well under the condition of being compatible with an existing system and guaranteeing consistency of transmission and feedback, and frequency efficiency of the system is improved.

Document EP 3 016 308 A1 discloses a CSI feedback method, a UE scheduling method, UE, and a base station. The CSI feedback method includes: receiving, by UE, a reference signal broadcast by a base station; performing channel estimation on a radio channel between the base station and the UE by using the reference signal, to obtain CSI and a channel quality parameter; adjusting the channel quality parameter according to a channel quality weight parameter, to obtain a channel statistic quality parameter; and when the channel statistic quality parameter exceeds a channel quality threshold, feeding back the CSI to the base station. In the present invention, because a channel quality parameter is dynamically adjusted by using a channel quality weight parameter, and it is selected, according to a result of comparing an adjusted channel statistic quality parameter with a channel quality threshold, whether to report CSI. UEs in a system can be evenly scheduled.

### SUMMARY

A technical problem to be resolved in embodiments of this disclosure is to provide methods for measuring channel state information and related devices, to resolve a problem that a terminal device reports CSI when a downlink frequency resource dynamically changes.

The scope of the invention is determined by the appended claims.

### BRIEF DESCRIPTION OF DRAWINGS

To describe the technical solutions in the embodiments of this disclosure or in the background more clearly, the following briefly describes the accompanying drawings required for describing the embodiments of this disclosure or the background.
FIG. 1 is an architectural diagram of a communications system according to an embodiment of this disclosure;
FIG. 2 is a schematic flowchart of a method for measuring channel state information according to an embodiment of this disclosure;
FIG. 3 is a schematic diagram of available frequency resources in a BWP according to an embodiment of this disclosure;
FIG. 4 is a schematic diagram of sending control information in a basic data scheduling unit of a first frequency resource according to an embodiment of this disclosure;
FIG. 5 is a schematic diagram of two manners of calculating wideband CSI according to an embodiment of this disclosure;
FIG. 6a is a schematic diagram of reporting second CSI according to an embodiment of this disclosure;
FIG. 6b is another schematic diagram of reporting second CSI according to an embodiment of this disclosure;
FIG. 6c is still another schematic diagram of reporting second CSI according to an embodiment of this disclosure;
FIG. 7 is a schematic diagram of subband CSI measurement according to an embodiment of this disclosure;
FIG. 8 is a schematic diagram of a CSI reporting manner corresponding to a frequency resource that has not been obtained through contention according to an embodiment of this disclosure;
FIG. 9 is a schematic diagram of another CSI reporting manner corresponding to a frequency resource that has not been obtained through contention according to an embodiment of this disclosure;
FIG. 10 is a schematic diagram of periodically reporting CSI according to an embodiment of this disclosure;
FIG. 11 is a schematic structural diagram of a terminal device according to an embodiment of this disclosure;
FIG. 12 is a schematic structural diagram of a network device according to an embodiment of this disclosure;
FIG. 13 is a simplified schematic structural diagram of a network device according to an embodiment of this disclosure; and
FIG. 14 is a simplified schematic structural diagram of a terminal device according to an embodiment of this disclosure.

### DESCRIPTION OF EMBODIMENTS

The following describes the embodiments of this disclosure with reference to the accompanying drawings in the embodiments of this disclosure.

In the specification, claims, and accompanying drawings of this disclosure, the terms "first", "second", "third", "fourth" and the like are intended to distinguish between different objects but do not indicate a particular order. In addition, the terms "including", "having", or any other variant thereof, are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Mentioning an "embodiment" in the specification means that a particular characteristic, structure, or feature described with reference to the embodiment may be included in at least one embodiment of this disclosure. The phrase shown in various locations in the specification may not necessarily refer to a same embodiment, and is not an independent or optional embodiment exclusive from another embodiment. It is explicitly and implicitly understood by a person skilled in the art that the embodiments described in the specification may be combined with another embodiment. Some terms in this disclosure are first explained, to facilitate understanding of a person skilled in the art.
(1) Carrier aggregation (Carrier Aggregation, CA): A CAtechnology may aggregate 2 to 5 or more component carriers (Component Carrier, CC) together to implement a larger transmission bandwidth. For example, for an LTE system, a transmission bandwidth of 640 MHz can be implemented, and an uplink transmission rate and a downlink transmission rate are effectively improved. A terminal device determines, based on a capability of the terminal device, a maximum quantity of carriers that can be simultaneously used for uplink and downlink transmission. To efficiently utilize fragmented spectra, the CA technology may support contiguous or non-contiguous carrier aggregation, including CCs with a same bandwidth or different bandwidths, adjacent or non-adjacent CCs in a same frequency band, and CCs in different frequency bands.
(2) Component carrier (Component Carrier, CC): The CC is a single uplink or downlink carrier of a primary cell or a secondary cell. The primary cell (Primary Cell, PCell) is a cell that runs on a primary component carrier, and a terminal performs initial connection establishment or reestablishment in the cell; or is a cell specified as the primary cell in a handover process. The secondary cell (Secondary cell, SCell) is a cell that runs on a secondary component carrier, and the cell is configured to provide more radio resources after a radio resource control (Radio Resource Control, RRC) connection is established.
(3) Clear channel assessment (Clear Channel Assessment, CCA): In a wireless communications system, before a device needs to send data on a channel, the device first receives the data on the channel, and if finding, after a given time, that no other device sends data on the channel, the device starts to send the data; or if finding that another device sends data, the device performs the process again after randomly avoiding a period of time. The method can effectively avoid a collision on a radio channel, and may also be referred to as carrier sense multiple access with collision avoidance (Carrier Sense Multiple Access with Collision Avoidance, CSMA/CA). The channel may be a channel resource included in a license-exempt frequency band resource.
(4) Channel state information (Channel State Information, CSI) measurement: In an existing long term evolution (Long-term Evolution, LTE)/LTE-advanced (LTE-Advanced, LTE-A) system and a future NR system, a terminal device periodically or aperiodically feeds back CSI information based on a configuration of a network device, so that the network device obtains a downlink channel status of the terminal device.
(5) License-exempt frequency band: The license-exempt frequency band is a frequency band that can be used for free, and different devices may share a resource on the license-exempt frequency band. Resource sharing on the license-exempt frequency band means that only limitations on indicators such as a transmit power and out-of-band leakage are specified for use of a particular spectrum, to ensure that a plurality of devices that jointly use the frequency band satisfy a basic coexistence requirement, and radio technologies, operating enterprises, and use time are not limited. However, service quality on the frequency band is also not ensured. An operator may implement network capacity offloading by using a license-exempt frequency band resource, but needs to comply with regulations and requirements of different regions and different spectra on the license-exempt frequency band resource. These requirements are usually posed to protect a public system such as radar and to ensure that a plurality of systems fairly coexist and cause as little negative impact to each other as possible, and include a transmit power limit, an out-of-band leakage indicator, indoor and outdoor use limitations. In addition, some regions further have some additional coexistence policies and the like.
(6) Channel quality indicator (Channel Quality Indicator, CQI): The CQI is used to reflect channel quality of a physical downlink shared channel (Physical Downlink Shared Channel, PDSCH). 0 to 15 are used to indicate the channel quality of the PDSCH. 0 indicates the worst channel quality, and 15 indicates the best channel quality. A terminal sends the CQI to a network device on a physical uplink control channel/physical uplink shared channel (Physical Uplink Control CHannel, PUCCH)/(Physical Uplink Shared Channel, PUSCH). After obtaining a value of the CQI, the network device learns of a current radio channel condition of the PDSCH. In this way, the PDSCH may be scheduled accordingly.
(7) Rank indicator RI (Rank Indicator): The RI is used to indicate a quantity of valid data layers of a PDSCH, and is used to notify, when a network device and a terminal transmit downlink data, the network device of a maximum quantity of spatial layers or a maximum quantity of codewords (Codeword) that can be supported by the terminal for receiving the downlink data.
(8) Precoding matrix indicator (Precoding Matrix Indicator, PMI): Precoding is an adaptive technology in a multi-antenna system, to be specific, a precoding matrix is adaptively changed at a transmit end based on channel state information (CSI), to change a channel through which a signal passes. Both the transmit end and a receive end store a set of codebooks including several precoding matrices, so that a terminal device may select one of the precoding matrices based on an estimated channel matrix and a criterion, and feed back an index value of the precoding matrix and quantized channel state information to a network device. At a next moment, the network device uses a new precoding matrix, and determines a modulation and coding scheme for a codeword based on the fed back quantized channel state information. In other words, a precoding matrix is used to resist channel fading or compensate for channel fading, so that a signal can be transmitted more reliably.

First, a to-be-resolved technical problem and an disclosure scenario in this disclosure are proposed. Currently, a licensed-assisted access using LTE (LAA-LTE, Licensed-Assisted Access Using LTE) system in a 4th generation (4th Generation, 4G) communications system may also be a communications system working on a license-exempt frequency band. The LAA-LTE system configures, by using a configuration and a structure of CA in an existing LTE system, carriers on a plurality of license-exempt frequency bands (for ease of description, license-exempt carriers for short) on a basis of configuring a carrier on a licensed frequency band (for ease of description, a licensed carrier for short) of an operator for communication, and uses the license-exempt carriers to perform communication with assistance of the licensed carrier. To be specific, an LTE device may use a licensed carrier as a primary component carrier PCC or a primary cell PCell, and use a license-exempt carrier as a secondary component carrier SCC or a secondary cell SCell through CA. In this way, the LTE device can inherit, by using the licensed carrier, a conventional advantage that the LTE device is used for wireless communication, for example, advantages in terms of mobility, security, quality of service, and simultaneous processing on multi-user scheduling, and may also offload a network capacity by using the license-exempt carrier, thereby reducing a payload of the licensed carrier. When the LAA system uses a license-exempt frequency band resource, the LAA system needs to comply with specifications specified for use of the license-exempt frequency band in various regions. In a future 5th generation (5th Generation, 5G) communications system, a new radio (New Radio, NR)-based communications system may also use a license-exempt frequency band resource for data communication.

To be specific, for a license-exempt spectrum, a license-exempt spectrum obtained by UE is uncertain, to be specific, dynamically changes. However, for a licensed spectrum, although a manner in which UE obtains a fixed spectrum is commonly used currently, a possibility that a frequency resource is dynamically scheduled to a terminal device in some disclosure scenarios is not excluded. However, currently, an existing CSI reporting policy is inapplicable to calculation of CSI of a wideband license-exempt frequency band with a variable frequency resource, because there is no dynamic change in a frequency resource in an existing technical solution.

Correct CSI measurement can adapt data transmission to a channel state and improve data transmission efficiency. Therefore, a technical problem to be resolved in this disclosure is how a variable wideband single carrier system ensures correct and effective CSI measurement and reporting in scenarios of a license-exempt frequency band resource and a licensed frequency band resource.

To facilitate understanding of the embodiments of this disclosure, based on the foregoing descriptions, the following first describes a communications system architecture on which the embodiments of this disclosure are based.

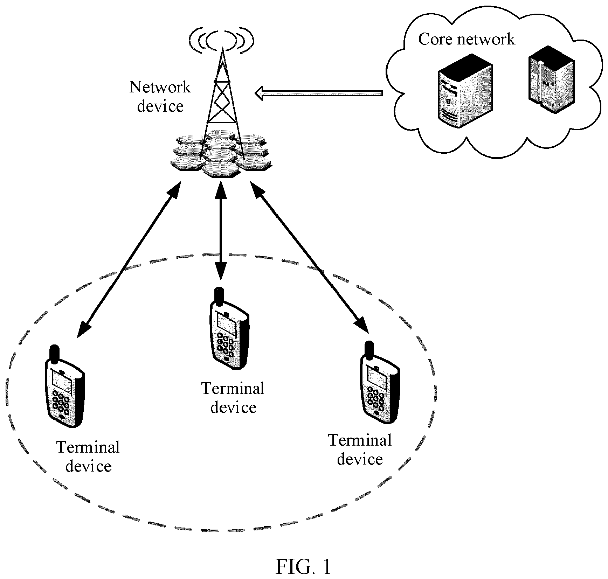

FIG. 1 is a diagram of an architecture of a communications system according to an embodiment of this disclosure. The architecture of the communications system includes a core network, a network device, and a terminal device. By way of example, and not limitation, the core network provides a related service for an entire communication process; the network device determines a second frequency resource for the terminal device, and determines, in the second frequency resource, a first frequency resource available to the terminal device in a first time unit; and the terminal device reports wideband CSI of the second frequency resource and the like based on the first frequency resource determined by the network device for the terminal device.

The terminal device may be a device on a user side in the communications system, and may support a manner of performing blind detection or receiving indication information sent by the network device to determine a downlink frequency resource used to receive downlink data sent by the network device. In addition, the terminal device supports periodic or aperiodic CSI reporting, and supports reporting of wideband CSI and/or subband CSI. The terminal device in this disclosure may also be referred to as user equipment UE, an access terminal, a subscriber unit, a subscriber station, a mobile station, a mobile station, a remote station, a remote terminal, a mobile device, a user terminal, a terminal, a wireless communications device, a user agent, or a user apparatus. The terminal device may be a station (STATION, "ST" for short) in a wireless local area network (Wireless Local Area Network, "WLAN" for short), a cellular phone, a cordless phone, a session initiation protocol (Session Initiation Protocol, "SIP" for short) phone, a wireless local loop (Wireless Local Loop, "WLL" for short) station, a personal digital assistant (Personal Digital Assistant, "PDA" for short) device, a handheld device having a wireless communication function, a computing device, another processing device connected to a wireless modem, a vehicle-mounted device, a wearable device, or a terminal device in a next generation communication system, such as a 5th generation (5th generation, "5G" for short) network or a future evolved public land mobile network (Public Land Mobile Network, "PLMN" for short).

The network device may be a network element on a network side in the communications system, for example, may be a gNB in a 5G communications system. Specifically, the network device supports periodic or aperiodic receiving of the wideband CSI and/or the subband CSI that are/is sent by the terminal device, and determines a current channel state between the network device and the UE based on the CSI reported by the terminal device, to effectively perform downlink scheduling for the terminal device. The network device in this disclosure may be an access point (ACCESS POINT, AP) in a WLAN, a base transceiver station (Base Transceiver Station, "BTS" for short) in GSM or CDMA, or may be a NodeB (NodeB, "NB" for short) in WCDMA, or may be an evolved NodeB (Evolved Node B, "eNB" or "eNodeB" for short) in LTE, a relay station, an access point, a vehicle-mounted device, a wearable device, or a network device (g Node B, "gNB" or "gNodeB" for short) in a future 5G network, a network device in a future evolved PLMN, or the like.

It should be understood that the embodiments of this disclosure may be applied to various communications systems, for example, a global system for mobile communications (Global System of Mobile communication, "GSM" for short) system, a code division multiple access (Code Division Multiple Access, "CDMA" for short) system, a wideband code division multiple access (Wideband Code Division Multiple Access, "WCDMA" for short) system, a general packet radio service (General Packet Radio Service, "GPRS" for short), a long term evolution (Long Term Evolution, "LTE" for short) system, a long term evolution-advanced (long term evolution-advanced, "LTE-A" for short) system, a universal mobile telecommunication system (Universal Mobile Telecommunication System, "UMTS" for short), or a next generation communications system such as a 5G new radio access (New Radio Access Technology in 3GPP, NR) system, a 5G NR system for short.

It should be noted that a method for measuring channel state information in this disclosure is mainly for a single-carrier system. For a carrier aggregation CA system, a network device (such as a base station) and a terminal device may separately manage, for each component carrier CC included in the CA system, a CSI feedback corresponding to each CC. Usually, regardless of an uncertainty about use of a license-exempt spectrum resource, a dynamic change of a spectrum resource caused by dynamic scheduling, or a dynamic change of a spectrum resource caused by another factor, the dynamically changed spectrum resource usually still includes an integer quantity of CCs. Therefore, the dynamic change does not affect a CSI calculation method corresponding to each CC.

It may be understood that the architecture of the communications system in FIG. 1 is merely an example of an implementation in the embodiments of this disclosure, and an architecture of a communications system in the embodiments of this disclosure includes but is not limited to the foregoing architecture of the communications system.

With reference to embodiments of information receiving and sending methods provided in this disclosure, the following specifically analyzes and resolves the technical problem proposed in this disclosure.

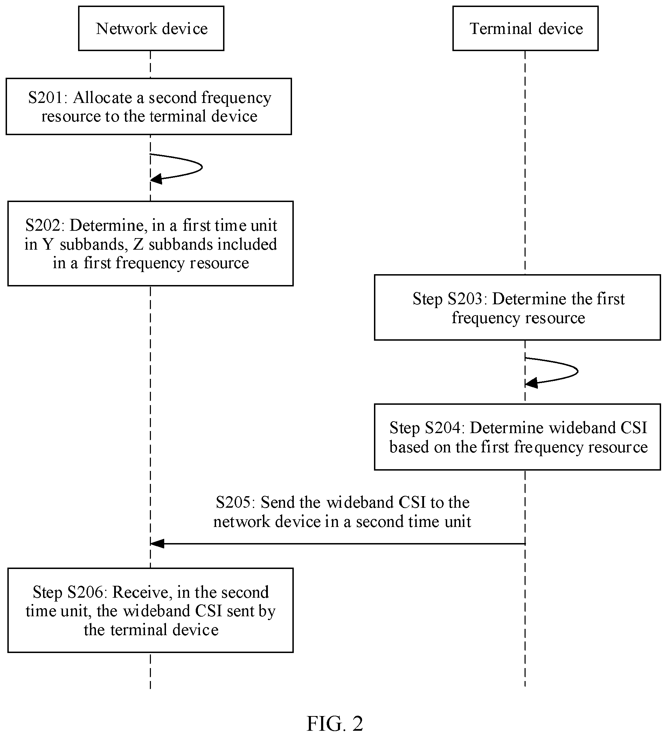

FIG. 2 is a schematic flowchart of a method for measuring channel state information according to an embodiment of this disclosure. The method may be applied to the communications system in FIG. 1. The following describes the method from a perspective of interaction between the network device and the terminal device with reference to FIG. 2. The method may include step S201 to step S206. Optionally, the method may further include step S207 to step S216.

Step S201: The network device allocates a second frequency resource to the terminal device.

Step S202: The network device determines, in a first time unit in Y subbands, Z subbands included in a first frequency resource.

Step S203: The terminal device determines the first frequency resource.

Step S204: The terminal device determines wideband CSI based on the first frequency resource.

Step S205: The terminal device sends the wideband CSI to the network device in a second time unit.

Step S206: The network device receives, in the second time unit, the wideband CSI sent by the terminal device.

The method for measuring channel state information in this disclosure is applied to the communications system including the network device and the terminal device, and a system frequency resource used by the communications system is divided into X subbands.

In step S201, the second frequency resource is a downlink frequency resource allocated by the network device to the terminal device, the second frequency resource includes the Y subbands, the Y subbands are used for downlink transmission, and the Y subbands are included in the X subbands in the system frequency resource. To be specific, the second frequency resource is determined by the network device in the system frequency resource. In addition, the second frequency resource corresponds to one piece of wideband channel state information CSI, to be specific, the terminal device needs to report one piece of wideband CSI for the second frequency resource. X≥Y≥2, Y>Z≥1, and X, Y, and Z are all integers. A scenario corresponding to the technical problem to be resolved in this disclosure is that the first frequency resource determined by the network device for the terminal device dynamically changes and is a part of the second frequency resource, and therefore, Y in this disclosure is greater than Z. In addition, in this disclosure, the second time unit is after the first time unit.

The following describes, with reference to specific embodiments, how the network device determines the second frequency resource in the system resource.

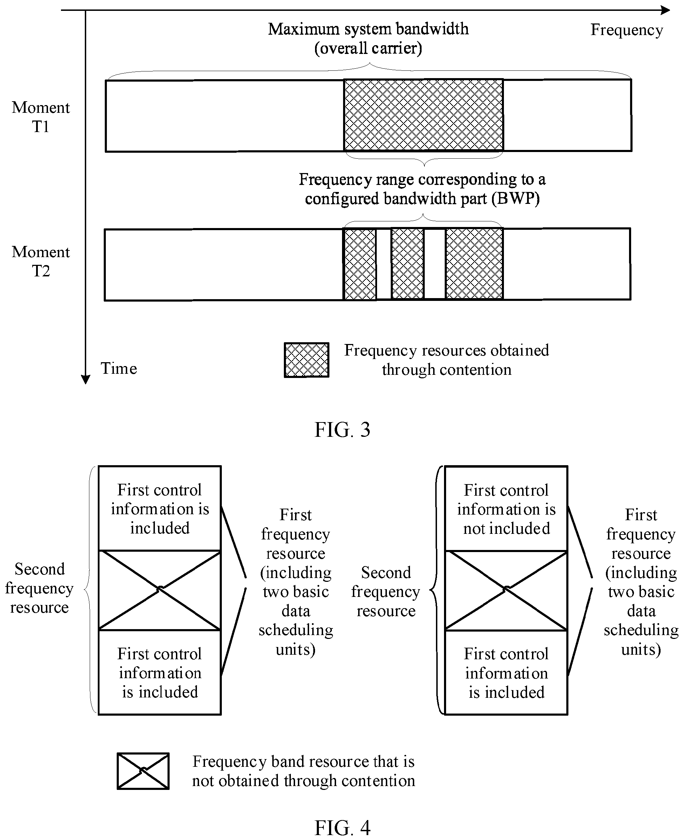

The network device and the terminal device usually have different component capabilities. Therefore, maximum frequency bandwidths in which the network device and the terminal device can work are different. For example, assuming that a maximum system bandwidth (Overall Carrier) is 100 MHz, a maximum frequency bandwidth in which the network device can transmit data may be 100 MHz; in other words, the network device may send downlink data and/or receive uplink data in 100 MHz at a same moment. However, limited by a component capability, the terminal device can receive downlink data and/or send uplink data on only some frequency resources at a same moment. FIG. 3 is a schematic diagram of available frequency resources in a bandwidth part (Bandwidth Part, BWP) according to an embodiment of this disclosure. A frequency bandwidth (which is also an entire system bandwidth) in which the network device works at a particular moment is shown as "Overall Carrier" in FIG. 3, and a frequency bandwidth in which the terminal device works at a particular moment is shown as "Bandwidth Part (BWP)" in the figure. It may be understood that, in this disclosure, the downlink data and the uplink data are for the network device, the downlink data is data sent by the network device, and the uplink data is data received by the network device.

Based on FIG. 3, it can be learned that the BWP is a part of "Overall Carrier". One BWP may include one or more subbands. The subband may be, for example, 20 MHz, 15 MHz, 10 MHz, or 5 MHz. This is not excluded that if the terminal device and the network device have a same data transmission or processing capability, a frequency range corresponding to one BWP is the same as a frequency range corresponding to "Overall Carrier".

For a terminal device, the network device configures one or more BWPs for the terminal device based on a capability of the terminal device. When one BWP includes a plurality of subbands, each subband may be considered as one CC, to implement data communication between the network device and the terminal device through CA, or to implement data communication between the network device and the terminal device in a single-carrier manner. However, when downlink and/or uplink data is scheduled through CA, required control overheads are proportionally increased with a quantity of component carriers included in the BWP, and short-delay data transmission may not be implemented. If the single-carrier manner is used, control overheads required for data transmission between the network device and the terminal device are low. For example, downlink data or uplink data can be transmitted, by using only one piece of downlink control information (Downlink Control Information, DCI), in a BWP including a plurality of subbands. In addition, in the single-carrier manner, usually, a bandwidth of a BWP is greater than a bandwidth of a single subband included in the BWP. Therefore, in addition to single carrier data transmission based on one BWP, short-delay data transmission can further be implemented.

In conclusion, to reduce control overheads and implement possible short-delay data transmission, the network device may schedule the terminal device to perform single-carrier data transmission in a BWP in a capability range of the terminal device. The data transmission herein includes downlink data transmission, and further includes uplink data transmission. In this disclosure, the system frequency resource may be a maximum frequency resource that can be used by the network device to send downlink data and/or receive uplink data at a particular moment, for example, a frequency part shown as "Overall Carrier" in FIG. 3. The second frequency resource may correspond to one BWP, and the first frequency resource may correspond to a plurality of subbands included in one BWP. Particularly, when the network device configures a plurality of BWPs for the terminal device, the second frequency resource may correspond to an activated BWP in the plurality of configured BWPs. A difference between a configured BWP and an activated BWP is described by using an example. If the network device configures a BWP A for the terminal device, the terminal device may perform only radio resource management (Radio Resource Management, RRM) measurement on the BWP A. If the network device activates a BWP A for the terminal device, the terminal device performs RRM measurement on the BWP A, and further detects a downlink control channel and/or a downlink signal for the BWP A.

In this disclosure, with reference to the foregoing descriptions of the BWP, single-carrier data transmission means that downlink data scheduled by the network device to the terminal device is scheduled on all available frequency resources included in a BWP by using one transport block (Transport Block, TB); and/or the terminal device transmits uplink data of the terminal device on all available frequency resources (which may be understood as the first frequency resource in this disclosure) included in a BWP by using one TB, and the uplink data may be based on scheduling, or may not be based on scheduling. For example, the uplink data is transmitted based on an uplink grant free (UL Grant Free) mechanism. One TB may include a plurality of code blocks (Code Block, CB), and it is determined that feedback information for downlink data transmission is fed back for the TB. The feedback information may be represented by using hybrid automatic repeat request acknowledgment (Hybrid Automatic Repeat reQuest Acknowledgement, HARQ-ACK) information, and the HARQ-ACK may include an acknowledgment (Acknowledgement, ACK) and a negative acknowledgment (Negative Acknowledgement, NACK), and optionally, may further include discontinuous transmission (Discontinuous Transmission, DTX). Certainly, when one TB includes a plurality of CBs, in addition to an HARQ-ACK feedback for the TB, the feedback information may further include HARQ-ACK feedbacks for the plurality of CBs included in the TB; or the HARQ-ACK feedback information may include only feedbacks for the plurality of CBs included in the TB. This is not specifically limited. The feedback manner is also applicable to uplink data transmission, and details are not described. In addition, even if one BWP includes Y 20 MHz subbands, where Y≥2, when the network device schedules the terminal device to receive downlink data in the BWP, the network device may schedule one TB on frequency resources corresponding to the Y 20 MHz subbands, and use only one control channel instead of using a plurality of (for example, Y) control channels respectively corresponding to the 20 MHz subbands. This description manner is also applicable to uplink data transmission, and details are not described.

Based on the foregoing descriptions, it may be understood that the single-carrier transmission manner in this disclosure may include mapping one TB to one BWP, or may include mapping one TB to frequency resources included in a plurality of BWPs. If one TB is mapped to a frequency resource included in one BWP, a frequency resource corresponding to receiving downlink data or sending uplink data by the terminal device may be an entire or a part of the frequency resource included in the BWP. If one TB is mapped to frequency resources included in a plurality of BWPs, a frequency resource corresponding to receiving downlink data or sending uplink data by the terminal device may be all or some frequency resources included in the plurality of BWPs. To be specific, in this disclosure, the network device may determine one or more second frequency resources for the terminal device. Correspondingly, each of the one or more second frequency resources corresponds to a first frequency resource.

Optionally, transmission of a plurality of codewords may further be supported in one BWP. For example, for multi-antenna transmission, the network device and the terminal device may transmit a plurality of codewords. In this case, each codeword may correspond to one TB, and each TB is mapped to all available frequency resources included in one BWP. It should be noted that, such transmission of a plurality of codewords in one BWP may alternatively be an implementation of performing single-carrier transmission in the BWP.

In this embodiment of this disclosure, in a frequency bandwidth range in which the network device can work at a particular time (for example, a frequency range corresponding to Overall Carrier in FIG. 3), one or more BWPs may be configured for one terminal device. For one terminal device, a plurality of configured BWPs may partially overlap; or may not overlap, and is totally staggered in a frequency division multiplexing (Frequency Division Multiplexing, FDM) manner. For one terminal device, if a plurality of BWPs are configured, frequency bandwidths (or frequency ranges) corresponding to all of the BWPs may be the same or different. For two adjacent BWPs, frequency ranges may be continuous, may be discontinuous, or may be represented in another form. This is not specifically limited.

Optionally, in this disclosure, for different terminal devices (regardless of whether network devices that serve the terminal devices are the same or different), configured BWPs may be a same BWP, or may be different BWPs. When the configured BWPs are different, the BWPs configured for the different terminal devices may partially overlap, or may be represented in another form. This is not specifically limited.

It should be noted that in this disclosure, frequency resources occupied by the network device and the terminal device for performing single-carrier transmission in one or more BWPs may be continuous or discontinuous. Using a license-exempt frequency band as an example, it is assumed that a frequency bandwidth in which the network device can work at a particular time is 100 MHz, and frequency resources in one BWP that are obtained by the network device through contention at a moment T1 and a moment T2 are separately shown in FIG. 3. It can be observed that frequency resources corresponding to the entire BWP are available at the moment T1, while only some frequency resources included in the BWP are available at the moment T2. Correspondingly, at the moment T1, the network device and the terminal device for which the BWP is configured may transmit data by using all the resources included in the BWP. Certainly, it is not excluded that at the moment T1, some resources included in all the resources (corresponding to "Overall Carrier") obtained through contention may be used to transmit data. However, at the moment T2, the network device and the terminal device for which the BWP is configured can transmit data by using only all or some of the frequency resources included in the BWP that are obtained through contention.

In a possible implementation, the second frequency resource may correspond to one BWP, and the Y subbands included in the second frequency resource may correspond to a plurality of subbands included in the BWP. Optionally, each of the Y subbands may correspond to a listening granularity of the network device or the terminal device. The listening granularity indicates a basic unit in which the network device or the terminal device performs capability detection or signal detection in frequency domain when availability of a license-exempt frequency band resource or whether a license-exempt frequency band resource is idle is assessed. For example, it is assumed that one BWP includes a frequency band resource of 60 MHz. When determining availability of a license-exempt frequency band resource, the network device listens on a channel every 20 MHz, so that sizes of determined available frequency bands included in the BWP may be respectively 0 MHz, 20 MHz, 40 MHz, and 60 MHz. In this case, one subband may correspond to one listening granularity, namely, 20 MHz. Alternatively, further, one subband may include a plurality of listening granularities of 20 MHz. For another example, some or all of the Y subbands may correspond to a plurality of subbands included in the BWP. For ease of description, the plurality of subbands included in the BWP may be expressed as the plurality of subbands included in the BWP. Optionally, each subband may correspond to a basic unit for channel quality feedback. It may be understood that in one BWP, there may further be different frequency resource division methods for a plurality of subbands included in the BWP. Regardless of which division method used, a plurality of subbands included in one BWP may completely not overlap, for example, the subbands are distributed in a frequency division multiplexing (Frequency Division Multiplexing, FDM) manner; or may partially overlap.

In this disclosure, as described above, a plurality of BWPs may be configured for one terminal device. Optionally, to reduce power consumption of the terminal device, at any moment, the terminal device receives scheduled downlink data or sends scheduled uplink data only in one activated BWP, or the terminal device may transmit uplink data based on UL grant free in the activated BWP. Optionally, in this disclosure, the second frequency resource may correspond to an activated BWP.

In step S202, the network device determines the first frequency resource in the Y subbands in the first time unit, and the first frequency resource includes the Z subbands. To be specific, the Z subbands are included in the Y subbands (it can be understood that the Z subbands are also included in the X subbands).

In this disclosure, the time unit may be a basic unit for data transmission. For example, in an LTE system, a slot (Slot) whose length is 0.5 millisecond or a subframe (Subframe) whose length is 1 ms may be considered as a time unit. In a 5G communications system, in addition to using a slot or a subframe as a time unit, a mini-slot (Mini-slot) whose time length is less than one slot may also be used as a time unit. The time unit may also have another representation form. This is not specifically limited in this disclosure.

The network device may determine the first frequency resource in the second frequency resource in the following two manners:
Manner 1: The network device obtains the first frequency resource through contention from the second frequency resource in the first time unit.

Specifically, the first frequency resource is a downlink frequency resource that is obtained by the network device through contention from the second frequency resource in the first time unit (in time domain) and that is used for downlink transmission. In this embodiment of this disclosure, the first frequency resource obtained by the network device through contention in the first time unit may have the following two implementations.

In a possible implementation, the first frequency resource is a frequency resource shared by the network device in the first time unit, and such sharing may be understood as idle channel sharing. For the idle channel sharing, assuming that a system includes a plurality of terminal devices, a license-exempt frequency band resource obtained by one terminal device through contention through CCA may be shared with another terminal device for use. For example, it is assumed that one system includes one network device (for example, a gNB in a 5G system) and a plurality of terminal devices, the network device obtains a license-exempt frequency band resource through contention through CCA, and a maximum time range in which the network device can use the license-exempt frequency band resource is represented by using an MCOT. In this case, in the MCOT, the network device may share the license-exempt frequency band resource obtained through contention with a terminal device that establishes a radio resource control (Radio Resource Control, RRC) link to the network device, or share the license-exempt frequency band resource obtained through contention with a terminal device served by the network device. When the terminal device with which the resource is shared uses the license-exempt frequency band resource included in the MCOT, availability of the license-exempt frequency band resource may not be determined through CCA any longer, or availability of the license-exempt frequency band resource needs to be determined only through a CCA mechanism without random backoff, or availability of the license-exempt frequency band resource may be determined by using another CCA mechanism. Compared with the CCA mechanism corresponding to the MCOT obtained through contention by the network device, the another CCA mechanism herein requires a shorter listening time for determining that the license-exempt frequency band resource is idle. For another example, it is assumed that a system includes one network device (for example, a gNB in a 5G system) and a plurality of terminal devices, one terminal device obtains a license-exempt frequency band resource through contention through CCA, and a maximum time range in which the terminal device can use the license-exempt frequency band resource is represented by using an MCOT. In this case, in the MCOT, the terminal device may share the license-exempt frequency band resource obtained through contention with a serving device of the terminal device, namely, the network device; or may share the license-exempt frequency band resource obtained through contention with another terminal device in the system. In this example, when the network device or the terminal device with which the resource is shared uses the license-exempt frequency band resource included in the MCOT, CCA performed by the network device or the terminal device may be as described above.

In another possible implementation, the first frequency resource is a frequency resource that is in the first time unit and that is obtained by the network device through contention through clear channel assessment CCA.

An example in which the first frequency resource is a resource obtained by the network device through contention is used below for description. The network device needs to determine availability of a license-exempt frequency band resource through CCA. Therefore, use of the license-exempt frequency band resource affects a listening result of the network device. Consequently, a quantity of the frequency resources obtained by the network device through contention may be less than a quantity of frequency resources on which the network device can transmit data at a particular time. As a result, a frequency resource range included in a BWP configured for the terminal device may be less than a frequency resource range corresponding to the BWP. For example, as shown in FIG. 3, it can be learned that at a moment T1 (which may be considered as a representation form of the first time unit), all frequency resources included in the BWP configured for the terminal device are obtained by the network device through contention; however, at a moment T2 (which may be considered as another representation form of the first time unit), some frequency resources included in the BWP configured for the terminal device are obtained by the network device through contention. Therefore, in this embodiment of this disclosure, the first frequency resource obtained by the network device through contention in the first time unit is a subset of the second frequency resource. The subset herein includes a full subset (for example, the frequency resources that are obtained through contention and that are included in the BWP at the moment T1 in FIG. 3), or includes a proper subset (for example, the frequency resources that are obtained through contention and that are included in the BWP at the moment T2 in FIG. 3).

In conclusion, it may be understood that for a license-exempt frequency band resource, in the foregoing descriptions, regardless of downlink data transmission or uplink data transmission, a corresponding transmission resource is a license-exempt frequency band resource obtained through contention, namely, the first frequency resource in this disclosure. The license-exempt frequency band resource obtained through contention herein includes a license-exempt frequency band resource obtained through contention after a device determines, through CCA, that a channel is idle, and further includes a corresponding frequency resource in a system for implementing idle channel sharing.

Manner 2: The network device determines to schedule the first frequency resource from the second frequency resource to the terminal device in the first time unit.

Specifically, the first frequency resource is an available downlink frequency resource that is included in the second frequency resource in frequency domain and that is scheduled by the network device to the terminal device in the first time unit (in time domain). In this embodiment of this disclosure, for example, in a licensed frequency band, the first frequency resource may be a frequency resource that is selected by the network device from the second frequency resource in the first time unit and scheduled to the terminal device, based on an actual channel status between the network device and the terminal device, a capability of the terminal device, and a downlink data transmission payload of the network device. Certainly, first frequency resource may alternatively be a frequency resource determined by the network device based on other factors. This is not specifically limited herein.

In step S203, the terminal device needs to determine the first frequency resource determined by the network device for the terminal device. Specific implementations of how the terminal device determines the first frequency resource may include the following Manner 1, Manner 2, and Manner 3.

Manner 1: The terminal device blindly detects a reference signal in the first time unit, and determines the first frequency resource based on a frequency resource corresponding to the detected reference signal.

Specifically, the terminal device blindly detects the reference signal in the first time unit, and determines the first frequency resource based on the frequency resource corresponding to the detected reference signal. Optionally, the terminal device may determine, by blindly detecting existence of a reference signal or a particular sequence, a frequency range corresponding to the first frequency resource. It may be understood that a premise is that after obtaining a frequency resource through contention, the network device can send a reference signal on the first frequency resource obtained through contention. The reference signal may be a common reference signal (Common Reference Signal, CRS), or may be a demodulation reference signal (Demodulation Reference Signal, DMRS), or may be another reference signal. For example, it is assumed that the first frequency resource includes a plurality of 20 MHz subbands, and the network device uses each 20 MHz subband as a listening granularity for determining an idle license-exempt frequency band. For a license-exempt frequency band resource obtained through contention, the network device may send a reference signal or a particular sequence by using the resource. Correspondingly, the terminal device may determine the first frequency resource through blind detection. Optionally, the network device may alternatively send, on the first frequency resource obtained through contention, a reference signal to which a preset scrambling code is added, to indicate the first frequency resource to the terminal device. For example, different sequence forms of the reference signal may represent different first frequency resources, and determining the first frequency resource by the terminal device includes determining a size and/or a location of the first frequency resource. Therefore, reference signals in different sequence forms may represent different sizes and/or different locations of the first frequency resource.

Manner 2: The terminal device receives first indication information sent by the network device, and determines the first frequency resource according to the first indication information.

In a possible implementation, the first indication information is first control information, and UE may determine an available downlink frequency band resource by detecting the first control information on a control channel. The first control information may be carried on a downlink control channel, and is terminal device-specific control information. For example, only a specific terminal device can receive the first control information, for example, a terminal device whose downlink data is scheduled on the first frequency resource obtained through contention. Alternatively, the first control information may be common control information, and may be received by all terminal devices served by the network device. For example, the common control information may be control information scrambled by using a cell common radio network temporary identifier (Cell Common Radio Network Temporary Identifier, CC-RNTI). Optionally, assuming that the first frequency resource includes a plurality of basic data scheduling units distributed in a frequency division multiplexing (Frequency Division Multiplexing, FDM) manner, the network device may send the first control information in each basic data scheduling unit in the first frequency resource. Alternatively, the network device may send the first control information in one specific basic data scheduling unit of the basic data scheduling units. The specific basic data scheduling unit may be, for example, a basic data scheduling unit that is included in the first frequency resource and that has a specific index, for example, a basic data scheduling unit having a smallest index or a largest index. The basic data scheduling unit in this embodiment of this disclosure may include a largest frequency resource corresponding to the control information sent by the network device. For example, each subband included in the first frequency resource may be considered as the basic data scheduling unit herein. Assuming that the system frequency resource used by the communications system is divided into four 20 MHz subbands (each 20 MHz may correspond to one subband herein), each 20 MHz subband may be considered as one basic data scheduling unit herein. When 20 MHz is a frequency listening unit in which the network device performs CCA, a value of the basic data scheduling unit may be considered to be equal to a value of the frequency listening unit. Alternatively, the value of the basic data scheduling unit may be equal to a subband frequency resource corresponding to CSI feedback performed by the terminal device, or may be represented in another form. This is not specifically limited in this disclosure. It may be understood that for the terminal device, the scheduled frequency resource may include one or more basic data scheduling units. This is not specifically limited in this disclosure. For different terminal devices, basic data scheduling units may be the same, or basic data scheduling units are divided based on the network device side. FIG. 4 is a schematic diagram of sending control information in a basic data scheduling unit of a first frequency resource according to an embodiment of this disclosure. The left diagram and the right diagram respectively illustrate manners of sending the first control information in one basic data scheduling unit and a plurality of basic data scheduling units. In this embodiment of the present invention, the terminal device may alternatively determine the first frequency resource in another manner. This is not specifically limited.

It may be understood that the first indication information may be control information, and may be carried on a physical downlink control channel, or may be other information that can be used to indicate the first frequency resource to the terminal device, for example, information carried on a physical downlink service channel.

Manner 3: The foregoing Manner 1 and Manner 2 are combined. To be specific, the terminal device determines the first frequency resource by receiving the indication information sent by the network device and by performing blind detection. For a specific implementation, refer to the foregoing Manner 1 and Manner 2. Details are not described herein again.

In step S204, the terminal device determines, based on the first frequency resource, the wideband CSI corresponding to the second frequency resource.

In this embodiment of the present invention, the determined wideband CSI may be CSI corresponding to all frequency resources (namely, the Z subbands) included in the first frequency resource. The CSI corresponding to all the frequency resources may be understood as that when determining the CSI, the terminal device makes reference to all information about the first frequency resource information. For example, when determining the wideband CSI, the terminal device collects statistics about signal energy and interference energy that correspond to all the frequency resources included in the first frequency resource, and calculates the wideband CSI based on the signal energy and the interference energy. Alternatively, the terminal device assumes optimal CSI that can be used when the network device transmits downlink data with the terminal device by using all the frequency resources included in the first frequency resource. The optimal CSI may be understood as that when the network device transmits downlink data with the terminal device by using all the frequency resources included in the first frequency resource and by using the optimal CSI, in a case of a specific data transmission error probability, transmission efficiency is the highest or a quantity of valid information bits that can be transmitted is the largest, and the specific data transmission error probability is, for example, 10% or 1%. This is not specifically limited. In addition, the optimal CSI may alternatively be defined in another manner, and this is not specifically limited. It should be noted that the collecting statistics about the signal energy and the interference energy that correspond to all the frequency resources included in the first frequency resource may include: collecting statistics only about signal energy and interference energy that correspond to a frequency resource on which a reference signal included in the first frequency resource is located; or collecting statistics only about signal energy and interference energy that correspond to a time domain position (for example, one OFDM symbol) in which a reference signal included in the first frequency resource is located and that correspond to all the frequency resources included in the first frequency resource. In addition, the network device transmits downlink data with the terminal device by using all the frequency resources included in the first frequency resource. All the frequency resources herein may be all frequency resources that can be used for downlink data transmission after control signaling overheads are excluded, and the control signaling overheads include a frequency resource occupied by a reference signal and/or a control channel. Certainly, the terminal device may alternatively determine, in another calculation manner, the CSI corresponding to the first frequency resource. This is not specifically limited herein.

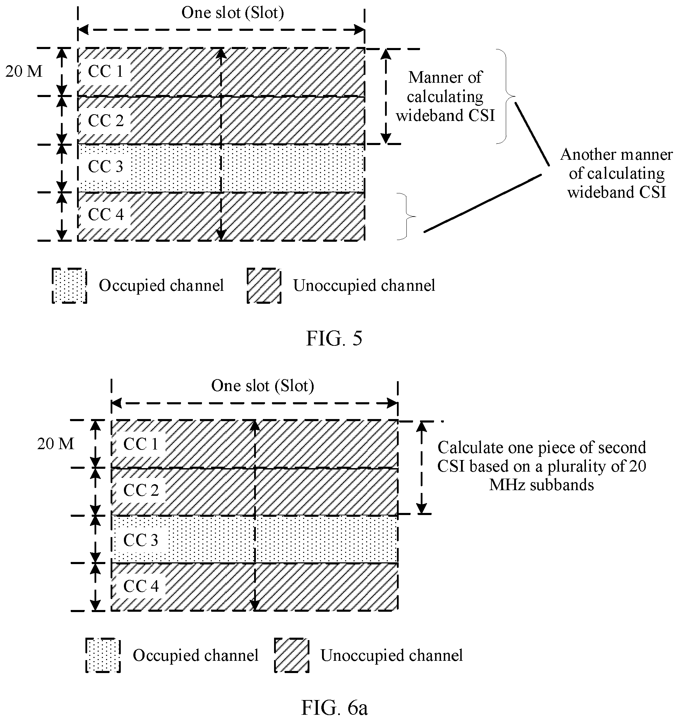

Optionally, in this embodiment of the present invention, the terminal device may alternatively determine, based on some frequency resources included in the first frequency resource, the wideband CSI corresponding to the second frequency resource. For example, as shown in FIG. 5, FIG. 5 is a schematic diagram of two manners of calculating wideband CSI according to an embodiment of this disclosure. It is assumed that the second frequency resource includes four frequency resources of 20 MHz, and in one slot (corresponding to the first time unit), the first frequency resource obtained by the network device through contention includes three frequency resources of 20 MHz (corresponding to an occupied channel part in FIG. 5), and two of the three frequency resources of 20 MHz are continuously distributed. When the terminal device calculates the wideband CSI, a manner is as described above. To be specific, the terminal device calculates the wideband CSI based on three frequency resources of 20 MHz that are discontinuously distributed and that are of a license-exempt frequency band resource obtained through contention (a frequency resource including a CC 1, a CC 2, and a CC4 in FIG. 5). Alternatively, the terminal device may calculate the wideband CSI based on continuous frequency resources of 40 MHz (a frequency resource including a CC 1 and a CC 2 in FIG. 5). It may be understood that, because of opportunistic use of the license-exempt frequency band resource, the first frequency resource may correspond to different frequency resources sizes at different moments. Correspondingly, a frequency bandwidth corresponding to the wideband CSI determined at different moments also dynamically changes. Optionally, the terminal device may determine, by using a default rule, some frequency resources that are included in the first frequency resource and that are used to calculate the wideband CSI. For example, the terminal device may use continuously distributed frequency resources as frequency resources corresponding to calculation of the wideband CSI, or use a plurality of frequency resources included in a frequency resource set as frequency resources corresponding to calculation of wideband CSI. The frequency resource set may be characterized in that a difference between frequency resource locations of adjacent subbands included in the frequency resource set is less than a specific frequency threshold. It is assumed that the frequency resource set includes three subbands, and the three subbands are respectively represented in ascending order of frequency resource locations by using Subband-1, Subband-2, and Subband-3. In this case, a subband adjacent to Subband-1 is Subband-2, a subband adjacent to Suband-2 includes Subband-1 and/or Subband-3, and a subband adjacent to Subband-3 includes Subband-2. When the frequency resources included in the first frequency resource are discontinuously distributed, continuously distributed frequency resources or adjacent frequency resources whose frequency resource position difference is less than a specific frequency threshold are selected to form a frequency resource set, and used as frequency resources corresponding to calculation of the wideband CSI. It can be ensured as much as possible that channel fading characteristics experienced by these frequency resources are basically similar, thereby ensuring accuracy of calculation of the wideband CSI. In this case, the terminal device may first determine the first frequency resource in the manner of determining the first frequency resource in step 203, and then determine, according to the default rule, the some frequency resources that are included in the first frequency resource and that are used to calculate the wideband CSI. The default rule herein may be preconfigured or predefined, or may be notified through dynamic signaling. In another optional implementation, the network device may alternatively enable, in an explicit notification manner, for example, by sending control information, the terminal device to determine the some frequency resources that are included in the first frequency resource and that are used to calculate the wideband CSI corresponding to the second frequency resource. The control information may be common control information or terminal device-specific information. This is not specifically limited herein.

In this disclosure, the first frequency resource obtained by the network device through contention from the second frequency resource is uncertain. To be specific, continuous frequency resources that are considered as a whole may be obtained through contention, scattered frequency resources may be obtained through contention, or continuous resources and discrete resources may be obtained through contention. Therefore, the terminal device specifically reports related CSI of the first frequency resource in a plurality of manners. For example, the wideband CSI of the first frequency resource may be directly reported (as described above), or the wideband CSI and a plurality of pieces of subband CSI may be simultaneously reported. The wideband CSI may be all resources in the first frequency resource, or may be some resources in the first frequency resource, and the subband CSI may be some resources in the first frequency resource. In addition, the wideband CSI calculated based on the first frequency resource may be considered as an average value of channel state information used for data communication between the network device and the terminal device. Considering that the first frequency resource includes a plurality of partial frequency resources, channel state information corresponding to all the partial frequency resources may not be totally consistent. For example, some frequency resources or a frequency resource may experience depth fading because frequency selective fading exists in data transmission. In addition, in consideration of downlink multi-user multiplexing transmission, usually, the network device may not necessarily schedule all frequency resources to one terminal device on the first frequency resource, but schedule the first frequency resource to a plurality of terminal devices in an FDM manner. Therefore, to match, as much as possible, data transmission between the network device and the terminal device with a channel state corresponding to a frequency resource used for the data transmission, and to further improve data transmission efficiency, the terminal device may further report the first frequency resource in a more granular way. For example, in addition to reporting the wideband CSI, the terminal device may further report the subband CSI. For how the terminal device specifically reports the subband CSI, in this embodiment of this disclosure, a specific implementation may be performed by performing step S207 and step S208 in the following method.

Step S207: The terminal device determines K1 pieces of first CSI and/or K2 pieces of second CSI based on the first frequency resource, where K1≥1 and K2≥1, the first CSI is CSI determined by the terminal device based on Z1 subbands in the Z subbands, Z>Z1≥1, the second CSI is CSI determined by the terminal device based on some downlink frequency resources included in one of the Z subbands, and K1, K2, and Z1 are all integers.

Step S208: The terminal device sends the K1 pieces of first CSI and/or the K2 pieces of second CSI to the network device in the second time unit.

In the foregoing step S207, for the first CSI, optionally, K1 may be equal to Z. In this case, Z1=1, and a frequency resource corresponding to one piece of first CSI is one of the Z subbands, and is also a listening unit of the network device or the terminal device, to be specific, the terminal device feeds back one piece of first CSI for each listening unit included in the first frequency resource. Optionally, K1 may alternatively be less than Z. When K1 is less than Z, the terminal device may select only some downlink frequency resources included in the first frequency resource (the Z subbands), to determine the first CSI. In this manner, the terminal device may still perform CSI feedback based on each listening unit included in the first frequency resource; however, only some listening units may be selected. The terminal device may determine to select some specific listening units, in at least one of the following manners: predefined information, preconfigured information, and physical layer control information. This is not specifically limited in this embodiment of the present invention.

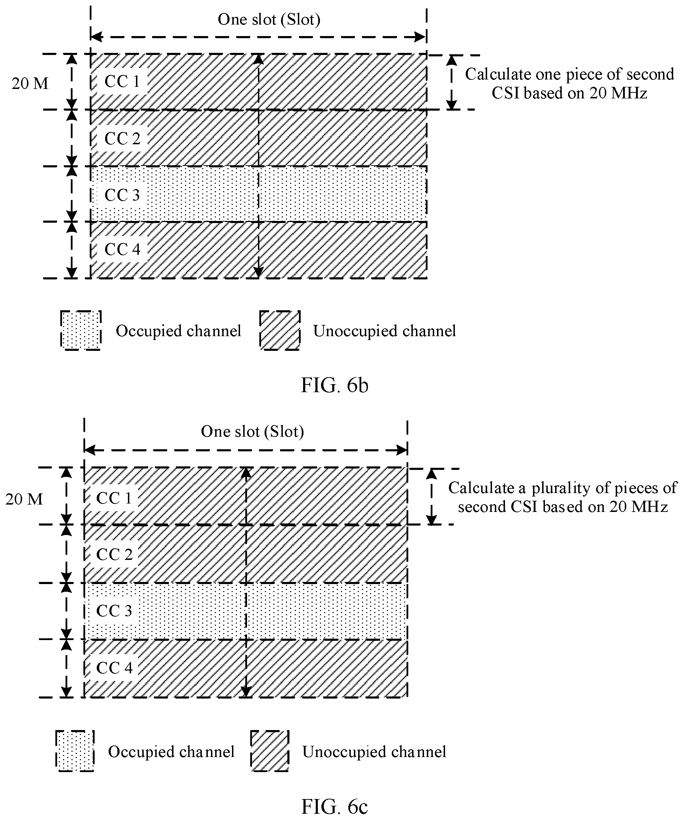

In the foregoing step S207, for the second CSI, optionally, K2 may be less than, equal to, or greater than Z. When K2 is greater than Z, the terminal device may determine a plurality of pieces of second CSI for one listening frequency band (subband). For example, it is assumed that the second frequency resource includes four 20 MHz subbands, and in one slot (corresponding to the first time unit), the first frequency resource obtained by the network device through contention includes three 20 MHz subbands, and a listening granularity or a listening unit of the network device or a listening frequency band is 20 MHz, to be specific, when performing CCA to determine whether a license-exempt frequency band resource is available, the network device performs listening every 20 MHz. In this case, one piece of first CSI is used as an example, and frequency resources based on which the first CSI is calculated may be separately shown in FIG. 6a and FIG. 6b. If the terminal device reports, in the manner of reporting the first CSI, each subband included in the first frequency resource, FIG. 6a may correspond to a case in which K1 is less than Z, and FIG. 6b may correspond to a case in which K1 is equal to Z. One piece of second CSI is used as an example, and frequency resources on which the second CSI is calculated is shown in FIG. 6c. If the terminal device reports, in the manner of reporting the second CSI, each subband included in the first frequency resource, K2 is greater than Z. It should be noted that, in this embodiment of the present invention, when the K2 pieces of second CSI are calculated, values of frequency bandwidths corresponding to the pieces of second CSI may be the same or may be different. This is not specifically limited herein. Similarly, in this embodiment of the present invention, when the K1 pieces of first CSI are calculated, values of frequency bandwidths corresponding to the pieces of first CSI may be the same or may be different. For ease of description, both the first CSI and the second CSI herein may be considered as subband CSI.

It should be noted that, for a license-exempt frequency band, the listening frequency band may be understood as a subband for ease of description; and for a licensed frequency band, division of the listening frequency band can be more flexible.

In this embodiment of the present invention, for how to report CSI, optionally, the network device may configure the terminal device to measure and report subband CSI (to be specific, for CSI of some frequency resources in the first frequency resource, and the some frequency resources may be less than, equal to, or greater than a size of a subband). Sizes of frequency resources corresponding to CSI of subbands may be the same or may be different. Because a size of the first frequency resource dynamically changes, in one manner, the size of the frequency resource corresponding to the subband CSI also dynamically changes based on the size of the first frequency resource. Specifically, a correspondence between the frequency resource corresponding to the subband CSI and the frequency resource included in the first frequency resource may be preconfigured, or is predefined, or is notified by using signaling. This is not specifically limited herein. In this case, the determining of the subband CSI may be implemented based on the implementation of step 207. In another manner, the size of the frequency resource corresponding to the subband CSI is determined based on a size of the second frequency resource. To be specific, when configuring a reporting manner of the subband CSI for the terminal device, the network device divides, based on the size of the second frequency resource, the subband corresponding to the subband CSI. For a license-exempt frequency band, the size of the frequency resource corresponding to the subband CSI may be the same as or different from the listening bandwidth of the network device or the terminal device. When the size of the frequency resource corresponding to the subband CSI is equal to or less than the listening bandwidth of the network device or the terminal device, based on different listening results, all of the frequency resource corresponding to the subband CSI is available (which may correspond to a case in which a license-exempt frequency band resource is obtained through contention); or all of the frequency resource is unavailable (which may correspond to a case in which no license-exempt frequency band resource is obtained through contention). In this case, if all of the frequency resource corresponding to the subband CSI is available, the determining of the subband CSI may be implemented based on the implementation of step 207. On the other hand, if all of the frequency resource corresponding to the subband CSI is unavailable, it may be considered that the subband CSI has no corresponding frequency resource. However, when the size of the frequency resource corresponding to the subband CSI is greater than the listening bandwidth of the network device or the terminal device, based on different listening results, in addition to the foregoing two cases of the frequency resource corresponding to the subband CSI, there may be a case in which a part of the frequency resource corresponding to the subband CSI is available (for example, corresponding to a license-exempt frequency band resource obtained through contention), and the other part is unavailable (for example, corresponding to a license-exempt frequency band resource that has not been obtained through contention). In the first two cases, the determining of the subband CSI may be implemented based on the implementation of step 207. In one case, to be specific, a case in which a part of the frequency resource corresponding to the subband CSI is available and the other part of the frequency resource corresponding to the subband CSI is unavailable, the determining of the subband CSI may be implemented in the following two manners. One manner is that the subband CSI is calculated based on only the available part in the frequency resource corresponding to the subband CSI. For example, on a license-exempt frequency band resource, the subband CSI may be calculated based on only the part that is in the frequency resource corresponding to the subband CSI and that is used to contend for the license-exempt frequency band resource. A specific implementation may be implemented based on the implementation of step 207. In another manner, if all of the frequency resource corresponding to the subband CSI is unavailable, it may be considered that the subband CSI has no corresponding frequency resource.

In a possible implementation, if the terminal device performs aperiodic CSI measurement report, the terminal device may report the CSI measurement result through a service data channel, and the service data channel may further include scheduled uplink service data. However, to reduce complexity of an implementation in which the network device receives and restores the CSI information aperiodically reported by the terminal device, it may be predefined that a payload size corresponding to the wideband CSI and the subband CSI that are sent by the terminal device for the second frequency resource is fixed, or a quantity of corresponding original information bits or a quantity of encoded bits is fixed. However, on a license-exempt frequency band resource, due to opportunistic channel use, the network device may not obtain some frequency resources through contention, and consequently, some subband CSI has no corresponding frequency resources. For a subband in which no frequency resource is obtained through contention, how to report subband CSI corresponding to the subband is also a problem that needs to be resolved in this disclosure.

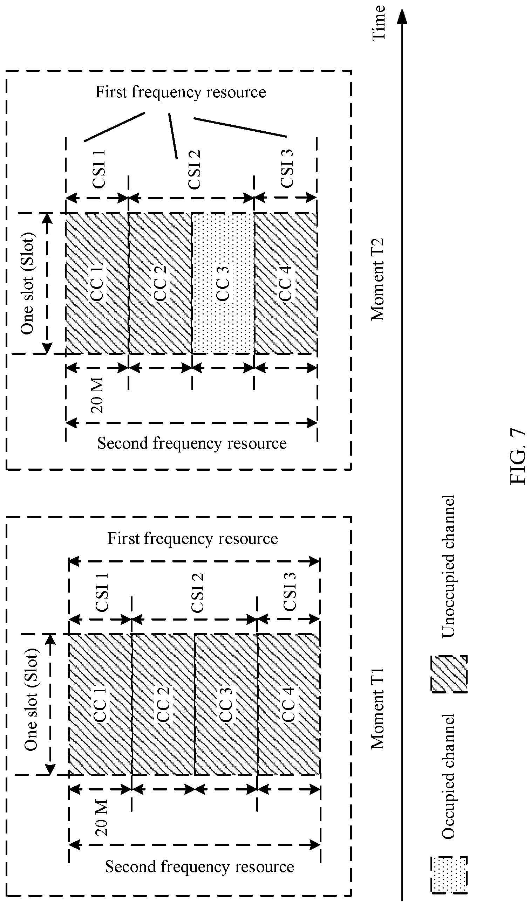

As shown in FIG. 7, FIG. 7 is a schematic diagram of subband CSI measurement according to an embodiment of this disclosure. It is assumed that the second frequency resource includes four 20 MHz subbands. For ease of description, the four 20 MHz subbands are respectively represented by using a CC 1, a CC 2, a CC 3, and a CC 4. It is assumed that at a moment T1 (corresponding to the left diagram in FIG. 7), the first frequency resource obtained by the network device through contention is equal to the second frequency resource, when configuring the first frequency resource or the second frequency resource for the terminal device, the network device may configure the terminal device to report one piece of wideband CSI and three pieces of subband CSI for the frequency resource. In this case, the terminal device may calculate the wideband CSI (calculated based on the CC 1, the CC 2, the CC 3, and the CC 4) and the three pieces of subband CSI (CSI 1 calculated based on the CC 1, CSI 2 calculated based on the CC 2 and the CC 3, and CSI 3 calculated based on the CC 4) based on a preconfigured frequency range corresponding to the subband CSI. It is further assumed that at a moment T2 (corresponding to the right diagram in FIG. 7), the first frequency resource obtained by the network device through contention includes only three 20 MHz subbands, to be specific, a frequency range corresponding to the CSI 2 is only 20 MHz (corresponding to an unoccupied channel part), and no frequency resource is obtained through contention (corresponding to an occupied channel part) in the other 20 MHz. In this case at the moment T2, for calculation of the CSI 2, in one case, the terminal device may calculate the CSI 2 based on only a part of a frequency resource corresponding to the CSI 2 (namely, the frequency resource CC 2 obtained through contention). In another case, a size (the CC 2+the CC3) of a frequency resource corresponding to the subband CSI is greater than the listening bandwidth (the CC 1, the CC 2, the CC 3, and the CC 4) of the network device or the terminal device. For example, if a license-exempt frequency band resource is obtained through contention on a part (the CC2) of the frequency resource corresponding to the subband CSI, and no license-exempt frequency band resource is obtained through contention on the other part, the terminal device may consider that a frequency resource corresponding to the CSI 2 has not been obtained through contention (even if a part of the frequency resource is obtained through contention). In other words, the subband CSI 2 has no frequency resource corresponding to the subband CSI 2 at the moment T2. How to report the subband CSI for the frequency resource that has not been obtained through contention is described in the following content.

For the foregoing step S208, it should be noted that in this embodiment of the present invention, when determining the first CSI and/or the second CSI, the terminal device may calculate the first CSI and/or the second CSI based on only the first frequency resource included in the first time unit and/or a downlink frequency resource specifically included in the first time unit; or the terminal device may calculate the first CSI and/or the second CSI based on the first frequency resource included in all or some downlink subframes included in a downlink burst (Downlink Burst, DL Burst) in which the first time unit is located and a downlink frequency resource specifically included in the first time unit. The downlink burst usually refers to a plurality of downlink time units continuously occupied in terms of time. Specifically, a time length during which one sending device, for example, one network device or terminal device, may continuously occupy a channel during one time of sending on a license-exempt frequency band is limited. One time of sending is once the device obtains a license-exempt frequency band resource through contention, a maximum time length for sending data by the device by using the license-exempt frequency band resource obtained through contention. The maximum time length is usually limited by local laws and regulations. For example, maximum occupied time lengths are also different based on different sent service priorities. Usually, when the device determines availability of a license-exempt frequency band resource, a longer time for performing CCA indicates a longer maximum time length after the device obtains the license-exempt frequency band resource through contention. On the contrary, when the device determines availability of a license-exempt frequency band resource, a shorter time for performing CCA indicates a shorter maximum time length after the device obtains the license-exempt frequency band resource through contention. To improve CSI measurement accuracy, when calculating CSI based on a license-exempt frequency band resource obtained through contention included in the first time unit, the terminal device may consider some more time units, but these time units and the first time unit need to be preferably in a same downlink burst. This is because the network device obtains different sizes of license-exempt frequency band resources through contention at different moments. Therefore, different transmit powers may be used in different downlink bursts, and different transmit powers may affect CSI measurement. Therefore, to ensure accuracy of the CSI measurement, when CSI is calculated based on a license-exempt frequency band resource obtained through contention included in a plurality of time units, the time units are preferably located in a same downlink burst. It should be noted that, in this embodiment of this disclosure, when determining the CSI, the terminal device may perform calculation based on a frequency resource included in one determined time unit, or may perform average measurement calculation based on frequency resources included in a plurality of determined time units. For a license-exempt frequency band, a plurality of time units for average measurement calculation of CSI may be in a same downlink burst.

After determining subband CSI (for example, the first CSI and the second CSI mentioned above), the terminal device may send the subband CSI to the network device in the second time unit. When the terminal device sends the subband CSI, one manner is that the terminal device directly sends an index index corresponding to the subband CSI to the network device, and the network device may determine, based on the received index index, a channel state corresponding to a case in which the network device and the terminal device transmit downlink data; and another manner is that the terminal device may send, to the network device, a difference between wideband CSI and subband CSI that correspond to the second frequency resource. For example, the terminal device sends, to the network device, the difference between the wideband CSI and the subband CSI that correspond to the second frequency resource. The network device may determine a specific value of the subband CSI based on the difference between the wideband CSI and the subband CSI and the wideband CSI, and may further determine a channel state corresponding to a case in which the network device and the terminal device transmit downlink data.

In this embodiment of this disclosure, time lengths corresponding to the first time unit and the second time unit may be the same or may be different. For example, the first time unit is one slot, and the second time unit may be one mini-slot.

In a possible implementation, the terminal device may send the wideband CSI by using a physical uplink control channel (for example, a PUCCH (Physical Uplink Control Channel) in an LTE system) or a physical uplink shared channel (for example, a PUSCH (Physical Uplink Shared Channel) in the LTE system) in the second time unit. The physical uplink control channel may include a channel for transmitting uplink control information, and the physical uplink shared channel may include a channel for transmitting uplink control information and/or service data. Herein, the uplink control information (Uplink Control Information, UCI) may include at least one of the following: CSI used to feed back channel quality; feedback information, such as a hybrid automatic repeat request-acknowledgment (Hybrid Automatic Repeat Request Acknowledgement, HARQ-ACK), for received downlink data; and a scheduling request (Scheduling Request, SR). The HARQ-ACK includes an acknowledgment (acknowledgement, ACK) and a negative acknowledgment (negative acknowledgement, NACK). Optionally, the CSI may include at least one of the following: a rank indicator (Rank Indicator, RI), a channel quality indicator (Channel Quality Indicator, CQI), and a precoding matrix indicator (Precoding Matrix Indicator, PMI). For a resource that has not been obtained through contention or a resource that is not allocated in the second frequency resource, namely, a frequency resource in the second frequency resource except the first frequency resource, if there is corresponding subband CSI, the following provides a specific implementation for how to report the subband CSI. The implementation may include step S209 to step S212 in the following method. For ease of description, an example in which the second frequency resource has no resource obtained through contention is used for description. However, the following method is also applicable to determining subband CSI corresponding to a frequency resource in the second frequency resource except the first frequency resource.

Step S209: The terminal device determines a third frequency resource, where the third frequency resource includes W subbands, the W subbands are included in subbands that are in the second frequency resource and that are different from those in the first frequency resource, (Y-Z)≥W≥1, and W is an integer.

Step S210: The terminal device determines P pieces of third CSI corresponding to the third frequency resource, where P≥1, and P is an integer.

Step S211: The terminal device sends the P pieces of third CSI to the network device in the second time unit.

Step S212: The network device receives, in the second time unit, the P pieces of third CSI sent by the terminal device.

In a possible implementation, at least one of the P pieces of third CSI is a preset value. To be specific, for a frequency resource that has not been obtained through contention, if subband CSI corresponding to the frequency resource is to be reported, the terminal device may report a preset value. For example, the preset value may be out of range, or CSI having a predefined CSI index. In a possible implementation, at least one of the P pieces of third CSI is determined by the terminal device based on a fourth frequency resource. The fourth frequency resource is a frequency resource corresponding to the third CSI, and is a downlink frequency resource that is determined by the terminal device before the first time unit and that is included in the third frequency resource in the first time unit. To be specific, the terminal device may use subband CSI determined, before the first time unit, based on the fourth frequency resource obtained by the network device through contention or the fourth frequency resource allocated (or scheduled) to the terminal device, as CSI corresponding to the fourth frequency resource included in the first time unit; or the terminal device may use CSI that corresponds to the fourth frequency resource and that has been reported before the second time unit, as CSI corresponding to the fourth frequency resource included in the first time unit, and report the CSI to the network device in the second time unit. Optionally, the terminal device may use subband CSI determined by using a valid fourth frequency resource included in a time unit that is before the first time unit and that is closest to a reporting moment (the second time unit), as CSI corresponding to the fourth frequency resource included in the first time unit; or the terminal device may use subband CSI corresponding to a valid fourth frequency resource that is reported in a time unit that is before the second time unit and that is closest to the second time unit, as CSI corresponding to the fourth frequency resource included in the first time unit. It should be noted that the valid fourth frequency resource herein is the frequency resource, a frequency part included in a license-exempt frequency band resource obtained by the network device through contention, a frequency part included in a frequency resource allocated or scheduled by the network device to the terminal device, or a frequency part included in a frequency resource that can be used for data transmission between the terminal device and the network device. In a possible implementation, with reference to the foregoing two implementations, to be specific, the terminal device may report a preset value for some subbands, and report, for the other subbands, subband CSI that corresponds to a frequency resource that has not been obtained through contention or that is not allocated in the first time unit but has been obtained through contention or has been allocated in a historical time unit and that is closet to a current reporting time.

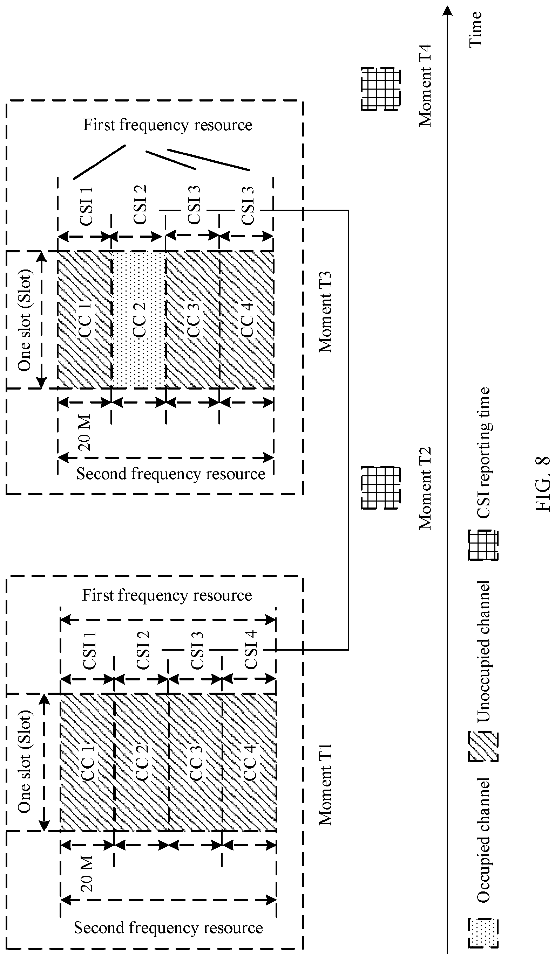

FIG. 8 is a schematic diagram of a CSI reporting manner corresponding to a frequency resource that has not been obtained through contention according to an embodiment of this disclosure. It is assumed that the second frequency resource includes four 20 MHz subbands, and each 20 MHz subband correspond to reporting of CSI of one subband. It is assumed that at a moment T1, the first frequency resource obtained by the network device through contention includes four 20 MHz subbands, and CSI reported by the terminal device at a reporting moment T2 is calculated based on the four 20 MHz subbands of the resource obtained through contention at the moment T1, to be specific, if the terminal device is configured to report wideband CSI and subband CSI based on the CSI reporting moment, at the moment T2, the terminal device reports wideband CSI (calculated based on a CC 1/CC 2/CC 3/CC 4) and four pieces of subband CSI (calculated based on the CC 1, the CC 2, the CC 3, and the CC 4 respectively) that correspond to the second frequency resource. It is assumed that at a moment T3, the first frequency resource obtained by the network device through contention includes only three 20 MHz subbands, such as a CC 1, a CC 3, and a CC 4, and CSI reported by the terminal device at a reporting moment T4 needs to be calculated based on the three 20 MHz subbands of the resource obtained through contention at the moment T3. In this case, the terminal device may calculate, based on the CC 1, the CC 3, and the CC 4 of the resource obtained by the network device through contention at the moment T3, wideband CSI corresponding to the second frequency resource, and separately calculate subband CSI 1, subband CSI 3, and subband CSI 4 based on the CC 1, the CC 3, and the CC 4. For a CC 2 of a resource that has not been obtained through contention at the moment T3, the terminal device may report the CSI 2 determined based on the CC2 of the resource obtained by the network device through contention at the T1 moment, to be specific, the terminal device may report, at the reporting moment T4, the CSI 2 reported at the reporting moment T2. Optionally, if the CSI 2 reported by the terminal device at the reporting moment T2 is an absolute value of the CSI 2 (which may be represented by using a value or an index index, or may be represented in another form, and no limitation is imposed), to be specific, the network device may directly determine the channel state information corresponding to the CC2 after receiving the CSI 2 reported by the terminal device, the terminal device may directly report, at the reporting moment T4, the CSI 2 reported at the moment T2. Optionally, if the CSI 2 reported by the terminal device at the reporting moment T2 is a relative value of the CSI 2 (which may be represented by using a value or an index index, or may be represented in another form, and no limitation is imposed), for example, a difference between the wideband CSI and the CSI 2 that are reported by the terminal device at the reporting moment T2, at the reporting moment T4, in one manner, the terminal device still directly reports the relative value of the CSI 2 that is reported at the reporting moment T2. Alternatively, in another manner, the terminal device may convert the relative value of the CSI 2 that is reported at the reporting moment T2 into an absolute value of the CSI 2, and then calculate a difference between the absolute value of the CSI 2 and the wideband CSI reported at the reporting moment T4, and reports the difference as a CSI value at the reporting moment T4.

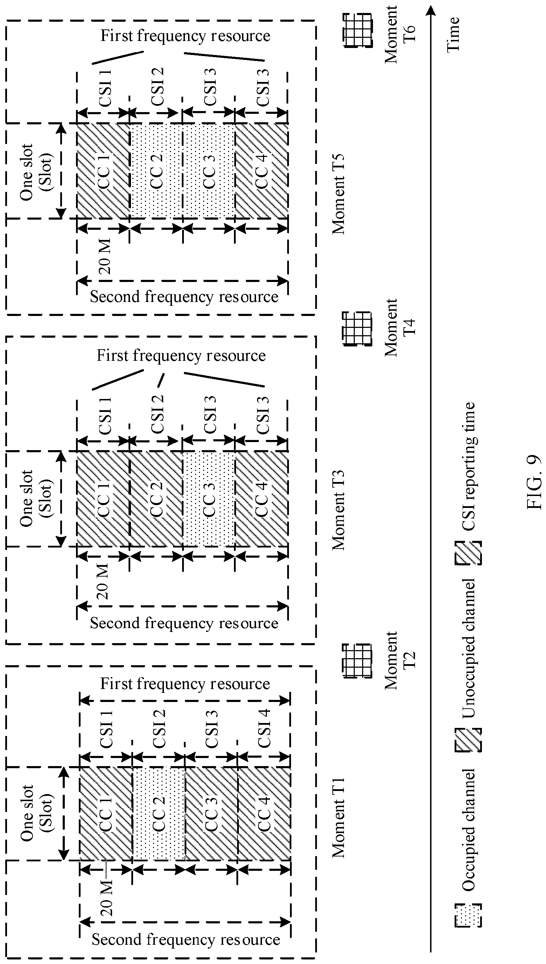

For another example, FIG. 9 is a schematic diagram of another CSI reporting manner corresponding to a frequency resource that has not been obtained through contention according to an embodiment of this disclosure. FIG. 9 shows an example of a schematic diagram in which the network device obtains a frequency resource through contention at three different moments (namely, a moment T1, a moment T3, and a moment T5). At a moment T2, the terminal device may report, based on a license-exempt frequency band resource that is obtained through contention at the moment T1, and may report wideband CSI calculated based on a CC 1, a CC 3, and a CC 4, and CSI 1, CSI 3, and CSI 4 of subbands that are respectively calculated based on the CC 1, the CC 3, and the CC 4. At the moment T1, the network device fails to obtain, through contention, a frequency resource corresponding to the CC 2. Therefore, subband CSI 2 based on the CC 2 may be calculated by using a frequency resource that corresponds to the CC 2 and that is obtained by the network device through contention at a moment that is before the moment T1 and that is closest to the moment T1, and is reported at the moment T2. At a moment T4, the terminal device may report, based on a license-exempt frequency band resource that is obtained through contention at the moment T3, wideband CSI calculated based on a CC 1, a CC2, and a CC4, and CSI 1, CSI 2, and CSI 4 of subbands that are respectively calculated based on the CC1, the CC2, and the CC4. At the moment T3, the network device fails to obtain, through contention, a frequency resource corresponding to a CC3. Therefore, for subband CSI 3 based on the CC 3, the CSI 3 reported at the moment T4 may be determined by using the CSI 3 corresponding to the CC 3 obtained by the network device through contention at the moment T1. At a moment T6, the terminal device may report, based on a license-exempt frequency band resource obtained through contention at the moment T5, wideband CSI calculated based on a CC 1 and a CC 4, and CSI 1 and CSI 4 of subbands that are respectively calculated based on the CC 1 and the CC 4. At the moment T5, the network device fails to obtain frequency resources corresponding to a CC 2 and a CC 3 through contention. Therefore, for subband CSI 2 based on the CC 2, CSI 2 reported at the moment T6 may be determined by using the CSI 2 corresponding to the CC2 obtained by the network device through contention at the moment T3, and CSI 3 reported at the moment T6 may be determined based on the CSI 3 corresponding to the CC3 obtained by the network device through contention at the moment T1. In this example, if the moment T5 is considered as the first time unit, frequency resources that are not obtained by the network device through contention in the first time unit include the CC 2 and the CC 3, and when the terminal device determines CSI corresponding to the resources that are not obtained through contention in the first time unit, in one manner, the terminal device may calculate, based on the CC 2 and the CC 3 that are included in a time unit in which the network device obtains the frequency resource CC 2 or CC 3 and that is before the first time unit and closest to the first time unit, the CSI 2 and the CSI 3 that are reported at the moment T6. It can be learned from FIG. 9 that, time units in which license-exempt frequency band resources are obtained through contention and on which the CSI 2 and the CSI 3 that are reported at the moment T6 are based may be different.

It should be noted that, in this disclosure, in addition to a case in which the first CSI, the second CSI, the third CSI, and the wideband CSI that corresponds to the second frequency resource are reported in a same time unit, the first CSI, the second CSI, and the third CSI may be reported in another time unit, and may be reported in different reporting time units respectively corresponding to the first CSI, the second CSI, and the third CSI. This is not specifically limited.

In this disclosure, in addition to reporting both the wideband CSI and the subband CSI to the network device, the wideband CSI and the subband CSI may be separately reported to the network device. The separately reporting the wideband CSI and the subband CSI to the network device may further include periodically and separately reporting the wideband CSI and the subband CSI to the network device. To be specific, the terminal device may send the CSI to the network device in a periodic reporting manner or an aperiodic reporting manner. When sending the CSI in the aperiodic reporting manner, the terminal device may simultaneously report the wideband CSI and the subband CSI information at a same reporting moment. When the terminal device sends the CSI in the periodic reporting manner, the terminal device reports different CSI based on different reporting moments. The following provides a specific implementation in which the terminal device separately reports the wideband CSI and the subband CSI to the network device, and further periodically reports the wideband CSI and the subband CSI to the network device. The specific implementation may include the following method steps.

Step S213: The terminal device determines a fifth frequency resource, where the fifth frequency resource is a frequency resource determined by the network device in the second frequency resource (the Y subbands) in a third time unit.

Step S214: The terminal device determines, based on fourth CSI and the fifth frequency resource, fifth CSI corresponding to the fifth frequency resource.

Step S215: The terminal device sends the fifth CSI to the network device in a fourth time unit. Step S216: The network device receives, in the fourth time unit, the fifth CSI sent by the terminal device.

In step S213, the fifth frequency resource is a downlink frequency resource included in the second frequency resource, and the third time unit is a time unit after the first time unit, to be specific, the fifth frequency resource is a fifth frequency resource that is determined by the terminal device through blind detection or by receiving the indication information in the third time unit after the first time unit and that is obtained by the network device through contention for the terminal device or allocated by the network device to the terminal device. It may also be understood that the fifth frequency resource is a frequency resource that is obtained by the network device through contention or allocated by the network device in the third time unit.

In a possible implementation, when the fifth frequency resource is included in the first frequency resource, the fourth CSI is the wideband CSI. To be specific, when a currently determined subband frequency is included in the first frequency resource, the wideband CSI calculated in the foregoing step S204 may be used as reference CSI for calculating the subband CSI, namely, the fifth CSI. In a possible implementation, when the fifth frequency resource is not included in the first frequency resource, the fourth CSI is CSI of a sixth frequency resource, and the sixth frequency resource is a downlink frequency resource that is determined by the terminal device before the first time unit and that includes the fifth frequency resource in the third time unit. To be specific, when a determined subband frequency (the fifth frequency resource) is not included in the first frequency resource, the fourth CSI corresponding to the sixth frequency resource that includes the fifth frequency resource and that has been obtained through contention in a historical time unit before the first time unit may be used as reference CSI for calculating the subband CSI, namely, the fifth CSI. Optionally, when a determined subband frequency (the fifth frequency resource) is not included in the first frequency resource, the fourth CSI corresponding to the sixth frequency resource included in a time unit that is before the first time unit and closest to the first time unit may be used as reference CSI for calculating the subband CSI, namely, the fifth CSI. The sixth resource herein includes the fifth frequency resource.

That the fifth frequency resource is not included in the first frequency resource includes two cases: the fifth frequency resource and the first frequency resource partially overlap and completely do not overlap.

In a possible implementation, the terminal device sends the wideband CSI and/or the fourth CSI based on a first period, and sends the fifth CSI based on a second period, and the first period is a positive integer multiple of the second period. To be specific, the terminal device may report the wideband CSI and the subband CSI (for example, the fifth CSI) in a periodic reporting manner. A period for reporting the wideband CSI and a period for reporting the subband CSI may be a same period or may be different periods. This is not specifically limited in this disclosure.

In a possible implementation, the wideband CSI or the fourth CSI is rank indicator RI information; and the fifth CSI includes at least one of wideband channel quality indicator CQI information, wideband precoding matrix indicator PMI information, subband channel quality indicator CQI information, and subband precoding matrix indicator PMI information, channel state indicator-reference signal resource indicator CRI (CSI-RS resource Indicator), and precoding type indicator PTI (Precoding Type Indicator). Alternatively, in another possible implementation, the wideband CSI or the fourth CSI is at least one of RI information, a wideband CQI, a wideband PMI, a wideband CRI, and a wideband PTI; and the fifth CSI includes at least one of a subband CQI, a subband PMI, a subband CRI, and a subband PTI. To be specific, in addition to sending information about the wideband CSI to the network device, the terminal device may further send information about the subband CSI to the network device. The terminal device may calculate at least one of a wideband CQI, a wideband PMI, a subband CQI, a subband PMI, a subband CRI, and a subband PTI based on wideband RI information; or calculate at least one of a subband CQI, subband PMI information, a subband CRI, and a subband PTI based on at least one of a wideband CQI, a wideband PMI, a wideband CRI, and a wideband PTI.

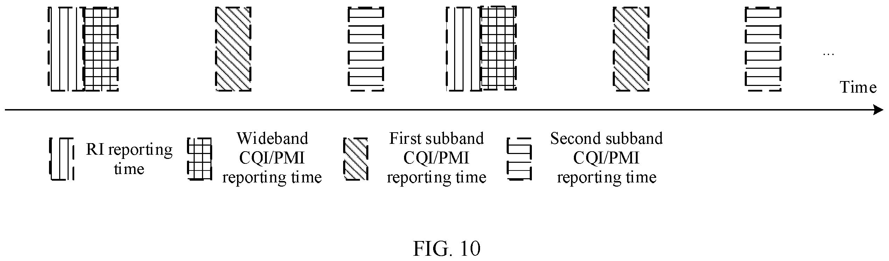

For example, when sending the subband CSI, the terminal device uses, as a reference resource, a frequency resource included in a time unit before a reporting moment, and calculates a result corresponding to the CSI that needs to be sent. There is a specific time delay relationship between the time unit including the reference resource and a time unit for sending the CSI by the terminal device. The specific time delay relationship may be predefined, preconfigured, or notified by using dynamic signaling. For a periodic CSI feedback mechanism, CSI fed back at different moments corresponds to different time units including the reference resource. On a license-exempt frequency band, because use of a frequency resource is opportunistic, reference resources included at different moments are different. FIG. 10 is a schematic diagram of periodically reporting CSI according to an embodiment of this disclosure. Assuming that the terminal device is configured to report CSI of two subbands, moments at which the terminal device reports different CSI are shown in the figure.

In a specific implementation, the wideband RI is used as an example of the wideband CSI. In this case, the first frequency resource may correspond to a reference resource for calculating the wideband RI, and the first time unit including the first frequency resource may correspond to a time unit including the reference resource for calculating the RI. After the terminal device sends the wideband RI to the network device in the second time unit, the terminal device needs to send the wideband CQI and/or the wideband PMI to the network device in the fourth time unit after the second time unit. Assuming that a reference resource for calculating the wideband CQI and/or the wideband PMI is located in the third time unit, and the third time unit is a time unit after the first time unit or the first time unit, based on a relationship between a size of the reference resource used to calculate the wideband CQI and/or the wideband PMI included in the third time unit and a size of the reference resource used to calculate the wideband RI included in the first time unit, Implementation 1 and Implementation 2 are provided below for calculating the wideband CQI and/or the wideband PMI.

Implementation 1:
Case 1: The fifth frequency resource is included in the first frequency resource.

In this case, the frequency resource (the first frequency resource) corresponding to calculation of the wideband RI may include a frequency resource (the fifth frequency resource) required for calculating the wideband CQI and/or the wideband PMI. Therefore, it may be considered that the wideband RI sent by the terminal device in the second time unit may be used as a basis for calculating, by the terminal device, the wideband CQI and/or PMI sent in the fourth time unit. A frequency range corresponding to channel state information reflected by the wideband RI may include a frequency range corresponding to channel state information reflected by the wideband CQI and/or the wideband PMI. Therefore, the channel state information may be reflected by calculating the wideband CQI and/or PMI based on the RI.

Case 2: The fifth frequency resource is not included in the first frequency resource.

In this case, a frequency range corresponding to channel state information reflected by the wideband RI cannot fully reflect a frequency range corresponding to channel state information reflected by the wideband CQI and/or the wideband PMI. Therefore, the channel state information cannot be reflected by calculating the wideband CQI and/or the PMI based on the RI.

In this case, the terminal device may calculate the wideband CQI and/or the wideband PMI based on a wideband RI corresponding to a time unit before the first time unit. The time unit before the first time unit has the following features:
(1) From a perspective of a frequency range: A frequency resource that is obtained by the network device through contention and that is included in the time unit includes the fifth downlink frequency resource obtained by the network device through contention in the third time unit. This is to ensure accuracy of the calculated wideband CQI and/or the calculated wideband PMI.
(2) From a perspective of time: The time unit is a time unit closest to the first time unit. Optionally, the time unit may further have the following feature: The terminal device calculates the wideband RI based on the frequency resource that is obtained by the network device through contention and that is included in the time unit.

In the foregoing manner, accurate measurement of the wideband CQI and/or the wideband PMI can be implemented.

Implementation 2:
For another example, the wideband RI or the wideband CQI/PMI is used as an example of the wideband CSI, and the subband CQI and/or the subband PMI are/is used as an example of the fifth CSI. In this case, the first frequency resource may correspond to a reference resource for calculating the wideband RI or the wideband CQI/PMI, and the fifth frequency resource may correspond to a reference resource for calculating the subband CQI and/or the subband PMI. Based on a relationship between the first frequency resource and the fifth frequency resource, the following implementations are provided below for calculating the subband CQI and/or the subband PMI.

Case 1: The fifth frequency resource is included in the first frequency resource.

A processing manner in this case is the same as that in Case 1 in Implementation 1.

Case 2: The fifth frequency resource is not included in the first frequency resource.

A processing manner in this case is the same as that in Case 2 in Implementation 1.

Optionally, in particular, for periodic CSI reporting, if the terminal device needs to calculate a particular piece of CSI (assumed to be CSI-X) based on another piece of CSI (assumed to be CSI-Y), it needs to be ensured that a frequency resource range corresponding to the CSI-Y needs to include at least a frequency resource range corresponding to the CSI-X. In this way, accuracy of the CSI-X can be ensured. The frequency resource range corresponding to the CSI-X (or the CSI-Y) is a frequency range based on which the terminal device calculates the CSI. Therefore, when a frequency resource corresponding to calculation of the CSI-X cannot be included in a frequency resource corresponding to calculation of the CSI-Y, the terminal device needs to use the CSI-Y corresponding to a corresponding frequency resource that can include the CSI-X as a basis for calculating the CSI-X.

In this embodiment of the present invention, the terminal device may alternatively determine, by blindly detecting whether there is a reference signal or receiving the indication information sent by the network device, the fifth frequency resource obtained by the network device through contention in the third time unit. A specific implementation may be a manner of determining the first frequency resource by the terminal device.

Optionally, in this embodiment of the present invention, if a time delay between a moment at which the terminal device reports the fourth CSI and a moment at which the terminal device reports the fifth CSI is greater than a specific threshold, the terminal device may calculate, based on a default CSI value that is used as a reference value, the fifth CSI sent in the fourth time unit. For example, when the terminal device calculates a periodically reported wideband CQI or subband CQI based on a periodically reported RI, if a determined reporting moment corresponding to the RI that can be used to calculate the CQI is before a current moment at which the wideband CQI or the subband CQI is reported, and is relatively far away from the current moment at which the wideband CQI or the subband CQI is reported, the terminal device may consider RI=1 as a reference value for calculating the wideband CQI or the subband CQI sent in the fourth time unit. An advantage is that accuracy of the fifth CSI sent in the fourth time unit can be ensured, and operations of the terminal device and the network device are also simplified.

It should be noted that in this embodiment of the present invention, predefinition may be implemented by using a protocol specification, and preconfiguration may be implemented by using higher layer signaling, to be specific, the network device implements preconfiguration by using radio resource control (Radio Resource Control, RRC) signaling or medium access control (Medium Access Control, MAC) signaling. The physical layer control information may be carried on a physical layer channel for implementation.

It should be noted that, in this embodiment of the present invention, a time unit that includes a frequency resource used to determine CSI may be understood as a reference time unit used to determine the CSI, for example, the first time unit, the third time unit, or the sixth time unit in this embodiment of the present invention. The reference time unit has the following features:
(1) The reference time unit includes the frequency resource corresponding to calculation of the CSI.
(2) The reference time unit is before a reporting time unit in which the CSI determined based on the reference time unit is located, and a time delay between the reference time unit and the reporting time unit satisfies a particular relationship. For example, the time delay is not less than a time required by the terminal device to calculate the CSI based on a reference resource included in the reference time unit.

In this embodiment of the present invention, the terminal device may aperiodically send the CSI, or may periodically send the CSI. For a case in which the CSI is aperiodically sent, the network device may trigger, by using physical layer trigger information, the terminal device to aperiodically send the CSI. The physical layer trigger information may be included in a physical downlink control channel, for example, may be included in downlink control information used by the network device to schedule the terminal device to transmit uplink data. In this case, a time unit in which the trigger information is located may be the same as or different from a reference time unit corresponding to the aperiodic sent CSI. This is not specifically limited. For a case in which the CSI is periodically sent, the network device may preconfigure, by using higher layer signaling, a time unit for periodically sending the CSI by the terminal device.

This disclosure further provides a method for reporting only subband CSI and no wideband CSI by a terminal device. In an implementation in which only subband CSI is reported, only an absolute value of the subband CSI needs to be reported, and an offset or the like is calculated without using wideband CSI as a reference. Specific method steps may include the following step S301 to step S306.

Step S301: A network device allocates a second frequency resource to a terminal device.

Step S302: The network device determines, in a first time unit in Y subbands, Z subbands included in a first frequency resource.

Step S303: The terminal device determines the first frequency resource.

Step S304: The terminal device determines subband CSI of the Z subbands based on the first frequency resource.

Step S305: The terminal device sends the subband CSI to the network device in a second time unit.

Step S306: The network device receives, in the second time unit, the subband CSI sent by the terminal device.

For how to determine a frequency resource corresponding to the subband CSI, refer to the foregoing related descriptions of the first CSI, the second CSI, and the third CSI. Details are not described herein again.

The foregoing describes in detail the methods in the embodiments of this disclosure. The following provides related apparatuses in the embodiments of this disclosure.

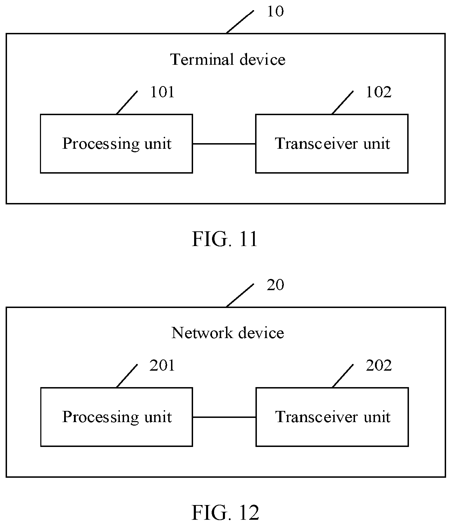

FIG. 11 is a schematic structural diagram of a terminal device according to an embodiment of this disclosure. The terminal device 10 may include a processing unit 101 and a transceiver unit 102. Each unit is described in detail as follows:
The processing unit 101 is configured to determine a first frequency resource, where Z subbands included in the first frequency resource are determined by the network device in a first time unit in Y subbands included in a second frequency resource, the second frequency resource is a downlink frequency resource allocated by the network device to the terminal device, the Y subbands are included in X subbands included in a system frequency resource, and the second frequency resource corresponds to one piece of wideband channel state information CSI, where X≥Y≥2,Y>Z≥1, and X, Y, and Z are all integers.

The processing unit 101 is further configured to determine the wideband CSI based on the first frequency resource.

The transceiver unit 102 is configured to send the wideband CSI to the network device in a second time unit.

In a possible implementation, the first frequency resource is a downlink frequency resource that is obtained by the network device through contention from the second frequency resource in the first time unit; or a downlink frequency resource that is scheduled by the network device from the second frequency resource to the terminal device in the first time unit.

In a possible implementation, that the processing unit 101 is specifically configured to:
blindly detecting a reference signal in the first time unit, and determining the first frequency resource based on a frequency resource corresponding to the detected reference signal; and/or receiving, by using the transceiver unit, first indication information sent by the network device, and determining the first frequency resource according to the first indication information. In a implementation, the processing unit 101 is further configured to determine K1 pieces of first CSI and/or K2 pieces of second CSI based on the first frequency resource, where K1≥1 and K2≥1, the first CSI is CSI determined by the processing unit based on Z1 subbands in the Z subbands, Z>Z1≥1, the second CSI is CSI determined by the processing unit based on some downlink frequency resources included in one of the Z subbands, and K1, K2, and Z1 are all integers.

The transceiver unit 102 is further configured to send the K1 pieces of first CSI and/or the K2 pieces of second CSI to the network device in the second time unit.

In a implementation, the processing unit 101 is further configured to: determine a third frequency resource, where the third frequency resource includes W subbands, the W subbands are included in subbands that are in the second frequency resource and that are different from those in the first frequency resource, (Y-Z)≥W≥1, and W is an integer; and determine P pieces of third CSI corresponding to the third frequency resource, where P≥1, and P is an integer.

The transceiver unit 102 is further configured to send the P pieces of third CSI to the network device in the second time unit.

In a possible implementation, at least one of the P pieces of third CSI is a preset value; and/or
at least one of the P pieces of third CSI is determined by the processing unit based on a fourth frequency resource, and the fourth frequency resource is a downlink frequency resource that is determined by the processing unit before the first time unit and that is included in the third frequency resource in the first time unit.

In a possible implementation, the processing unit 101 is further configured to: determine a fifth frequency resource, where the fifth frequency resource is a frequency resource determined by the network device in the second frequency resource in a third time unit, and the third time unit is a time unit after the first time unit; and determine, based on fourth CSI and the fifth frequency resource, fifth CSI corresponding to the fifth frequency resource.

The transceiver unit 102 is further configured to send the fifth CSI to the network device in a fourth time unit.

In a possible implementation, when the fifth frequency resource is included in the first frequency resource, the fourth CSI is the wideband CSI; or
when the fifth frequency resource is not included in the first frequency resource, the fourth CSI is CSI of a sixth frequency resource, where the sixth frequency resource is a downlink frequency resource that is determined by the processing unit before the first time unit and that includes the fifth frequency resource in the third time unit.

In a possible implementation, the transceiver unit 102 is further configured to:
send the wideband CSI and/or the fourth CSI based on a first period, and send the fifth CSI based on a second period, where the first period is a positive integer multiple of the second period.

In a possible implementation, the wideband CSI or the fourth CSI is rank indicator RI information; and the fifth CSI includes at least one of wideband channel quality indicator CQI information, wideband precoding matrix indicator PMI information, subband channel quality indicator CQI information, and subband precoding matrix indicator PMI information.

It should be noted that for functions of the functional units in the network device 10 described in this embodiment of this disclosure, refer to related descriptions in the foregoing method embodiments in FIG. 1 to FIG. 10. Details are not described herein again.

FIG. 12 is a schematic structural diagram of a network device according to an embodiment of this disclosure. The network device 20 may include a processing unit 201 and a transceiver unit 202. Each unit is described in detail as follows:
The processing unit 201 is configured to allocate a second frequency resource to a terminal device, where Y subbands included in the second frequency resource are included in X subbands included in a system resource, the Y subbands are used for downlink transmission, and the second frequency resource corresponds to one piece of wideband channel state information CSI.

The processing unit 201 is further configured to determine, in a first time unit, Z subbands included in a first frequency resource in the Y subbands.

The transceiver unit 202 is configured to receive, in a second time unit, the wideband CSI sent by the terminal device, where the wideband CSI is CSI determined by the terminal device based on the first frequency resource, X≥Y≥2, Y>Z≥1, and X, Y, and Z are all integers.

In a possible implementation, the processing unit 201 is further configured to:
obtain the first frequency resource through contention from the second frequency resource in the first time unit; or
schedule the first frequency resource from the second frequency resource to the terminal device in the first time unit.

In a implementation, the transceiver unit 202 is further configured to:
receive, in the second time unit, K1 pieces of first CSI and/or K2 pieces of second CSI sent by the terminal device, where K1≥1 and K2≥1, the first CSI is CSI determined by the terminal device based on Z1 subbands in the Z subbands, Z>Z1≥1, the second CSI is CSI determined by the terminal device based on some downlink frequency resources included in one of the Z subbands, and K1, K2, and Z1 are all integers.

In a implementation, the transceiver unit 202 is further configured to:
receive, in the second time unit, P pieces of third CSI sent by the terminal device, where P≥1, the P pieces of third CSI are CSI corresponding to a third frequency resource, the third frequency resource includes W subbands, the W subbands are included in subbands that are in the second frequency resource and that are different from those in the first frequency resource, (Y-Z)≥W≥1, and P and W are both integers.

In a possible implementation, at least one of the P pieces of third CSI is a preset value; and/or
at least one of the P pieces of third CSI is determined by the terminal device based on a fourth frequency resource, and the fourth frequency resource is a downlink frequency resource that is determined by the terminal device before the first time unit and that is included in the third frequency resource in the first time unit.

In a possible implementation, the transceiver unit 202 is further configured to:
receive, in a fourth time unit, fifth CSI sent by the terminal device, where the fifth CSI is CSI that corresponds to a fifth frequency resource and that is determined by the terminal device based on fourth CSI and the fifth frequency resource, the fifth frequency resource is a frequency resource that is determined by the network device in the second frequency resource in a third time unit, and the third time unit is a time unit after the first time unit.

In a possible implementation, when the fifth frequency resource is included in the first frequency resource, the fourth CSI is the wideband CSI; or
when the fifth frequency resource is not included in the first frequency resource, the fourth CSI is CSI of a sixth frequency resource, where the sixth frequency resource is a downlink frequency resource that is determined by the terminal device before the first time unit and that includes the fifth frequency resource in the third time unit.

In a possible implementation, the transceiver unit 202 is further configured to:
receive, at a first period, the wideband CSI and/or the fourth CSI sent by the terminal device, and receive, at a second period, the fifth CSI sent by the terminal device, where the first period is a positive integer multiple of the second period.

In a possible implementation, the wideband CSI or the fourth CSI is rank indicator RI information; and the fifth CSI includes at least one of wideband channel quality indicator CQI information, wideband precoding matrix indicator PMI information, subband channel quality indicator CQI information, and subband precoding matrix indicator PMI information.

Optionally, it should be noted that for functions of the functional units in the terminal device 20 described in this embodiment of this disclosure, refer to related descriptions in the foregoing method embodiments in FIG. 1 to FIG. 10. Details are not described herein again.

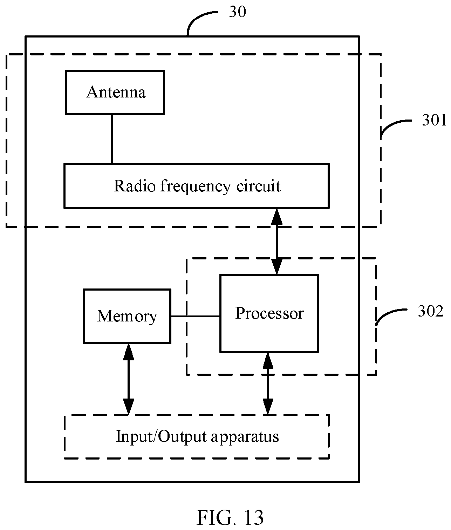

FIG. 13 is a simplified schematic structural diagram of a network device according to an embodiment of this disclosure. Specifically, for example, the network device is a base station. The base station includes a part 301 and a part 302. The part 301 is mainly configured to: send and receive a radio frequency signal, and convert the radio frequency signal into a baseband signal. The part 302 is mainly configured to: perform baseband processing, control the base station, and the like. The part 301 may be usually referred to as a transceiver unit, a transceiver machine, a transceiver circuit, a transceiver, or the like. The part 302 is usually a control center of the base station, and may be usually referred to as a processing unit, configured to control the base station to perform the steps performed by the network device in the foregoing FIG. 2. For details, refer to the descriptions of the foregoing related parts.

The transceiver unit in the part 301 may also be referred to as a transceiver machine, a transceiver, or the like, and includes an antenna and a radio frequency unit. The radio frequency unit is mainly configured to perform radio frequency processing. Optionally, in the part 301, a component that is configured to implement a receiving function may be considered as a receiving unit, and a component that is configured to implement a sending function may be considered as a sending unit. To be specific, the part 301 includes the receiving unit and the sending unit. The receiving unit may also be referred to as a receiver machine, a receiver, a receiver circuit, or the like. The sending unit may be referred to as a transmitter machine, a transmitter, a transmitter circuit, or the like.

The part 302 may include one or more boards. Each board may include one or more processors and one or more memories, and the processor is configured to read and execute a program in the memory, to implement a baseband processing function and control the base station. If there are a plurality of boards, the boards may be interconnected to improve a processing capability. In an optional implementation, a plurality of boards may share one or more processors, or a plurality of boards share one or more memories, or a plurality of boards simultaneously share one or more processors.

The communications apparatus may be a chip, and the chip includes a transceiver unit and a processing unit. The transceiver unit may be an input/output circuit or a communications interface of the chip. The processing unit is a processor, a microprocessor, or an integrated circuit integrated on the chip. The chip may be applied to the foregoing network device, and supports the network device in performing the foregoing methods.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedure or functions according to the embodiments of this disclosure are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

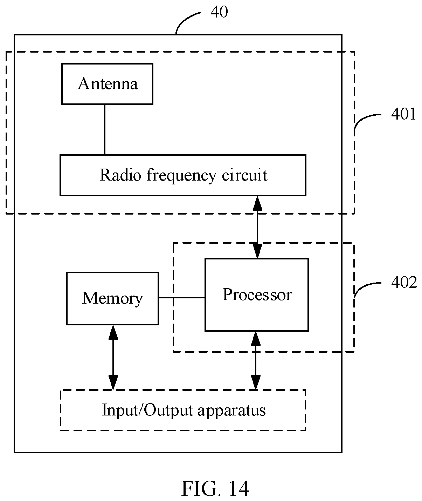

FIG. 14 is a simplified schematic structural diagram of a terminal device according to an embodiment of this disclosure. For ease of understanding and convenience of figure illustration, an example in which the terminal device is a mobile phone is used in FIG. 14. As shown in FIG. 14, the terminal device includes a processor, a memory, a radio frequency circuit, an antenna, and an input/output apparatus. The processor is mainly configured to: process a communications protocol and communication data, control the terminal device, execute a software program, process data of the software program, and the like. For example, the processor is configured to control the mobile phone to perform the steps performed by the terminal device in FIG. 2. For details, refer to the descriptions of the foregoing related parts. The memory is mainly configured to store the software program and the data. The radio frequency circuit is mainly configured to: perform conversion between a baseband signal and a radio frequency signal, and process the radio frequency signal. The antenna is mainly configured to send and receive a radio frequency signal in an electromagnetic wave form. The input/output apparatus, for example, a touchscreen, a display screen, or a keyboard, is mainly configured to: receive data entered by a user, and output data to the user. It should be noted that terminal devices of some types may not have the input/output apparatus.

When data needs to be sent, after performing baseband processing on the to-be-sent data, the processor outputs a baseband signal to the radio frequency circuit. After performing radio frequency processing on the baseband signal, the radio frequency circuit sends the radio frequency signal in an electromagnetic wave form to the outside by using the antenna. When data is sent to the terminal, the radio frequency circuit receives a radio frequency signal by using the antenna, converts the radio frequency signal into a baseband signal, and outputs the baseband signal to the processor. The processor converts the baseband signal into data, and processes the data. For ease of description, FIG. 14 shows only one memory and one processor. In an actual terminal product, there may be one or more processors and one or more memories. The memory may also be referred to as a storage medium, a storage device, or the like. The memory may be disposed independent of the processor, or may be integrated with the processor. This is not limited in this embodiment of this disclosure.

In this embodiment of this disclosure, the antenna and the radio frequency circuit that have transmission and reception functions may be considered as a transceiver unit of the terminal device, and the processor that has a processing function may be considered as a processing unit of the terminal device. As shown in FIG. 14, the terminal device 40 includes a transceiver unit 401 and a processing unit 402. The transceiver unit may also be referred to as a transceiver, a transceiver machine, a transceiver apparatus, or the like. The processing unit may also be referred to as a processor, a processing board, a processing module, a processing apparatus, or the like. The processing unit may be a central processing unit (English: central processing unit, CPU for short), a network processor (English: network processor, NP for short), or a combination of a CPU and an NP. The processing unit may further include a hardware chip. The hardware chip may be an disclosure-specific integrated circuit (English: disclosure-specific integrated circuit, ASIC for short), a programmable logic device (English: programmable logic device, PLD for short), or a combination thereof. The PLD may be a complex programmable logic device (English: complex programmable logic device, CPLD for short), a field-programmable gate array (English: field-programmable gate array, FPGA for short), generic array logic (English: generic array logic, GAL for short), or any combination thereof. Optionally, a component for implementing a receiving function in the transceiver unit 401 may be considered as a receiving unit, and a component for implementing a sending function in the transceiver unit 401 may be considered as a sending unit. To be specific, the transceiver unit 401 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiving circuit, or the like. The sending unit sometimes may also be referred to as a transmitter machine, a transmitter, a transmitter circuit, or the like. When the communications apparatus is a chip, the chip includes a transceiver unit and a processing unit. The transceiver unit may be an input/output circuit or a communications interface. The processing unit is a processor, a microprocessor, or an integrated circuit integrated on the chip.

Although this disclosure is described with reference to the embodiments herein, in a process of implementing this disclosure that claims protection, a person skilled in the art may understand and implement other changes in the disclosed embodiments.

An embodiment of this disclosure further provides a chip. The chip includes a communications interface and a processor. The processor is configured to control the communications interface to send or receive a signal, and is configured to process a signal received by the communications interface or generate a signal to be sent by the communications interface.

Specifically, the processor is configured to perform the procedure or steps on a terminal side in the method for measuring channel state information provided in the foregoing method embodiments; or the processor is configured to perform the procedure or steps on a network device side in the method for measuring channel state information provided in the foregoing method embodiments. Optionally, the chip further includes a storage module, and the storage module stores an instruction. The processing module reads the instruction stored in the storage module to execute a related operation, and control the communications interface to perform related transmission and reception operations.

It should be understood that sequence numbers of the foregoing processes do not mean execution sequences in various embodiments of this disclosure. The execution sequences of the processes should be determined according to functions and internal logic of the processes, and should not be construed as any limitation on the implementation processes of the embodiments of this disclosure. A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular disclosures and design constraint conditions of the technical solutions. A person skilled in the art may use different methods to implement the described functions for each particular disclosure, but it should not be considered that the implementation goes beyond the scope of this disclosure.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this disclosure, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of this disclosure are all or partially generated. The computer may be a general-purpose computer, a special-purpose computer, a computer network, or other programmable apparatuses. The computer instruction may be stored in a computer readable storage medium, or may be transmitted by using the computer readable storage medium. The computer instructions may be transmitted from a website, computer, server, or data center to another web site, computer, server, or data center in a wired (for example, a coaxial cable, an optical fiber, or a digital subscriber line (digital subscriber line, DSL)) or a wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid state disk (solid state disk, SSD)), or the like.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium includes: any medium that can store program code, such as a read-only memory (read-only memory, ROM), a random access memory (random access memory, RAM), a magnetic disk, or an optical disc.

## Claims

1. A method for measuring channel state information, applied to a communications system comprising a network device (20, 30) and a terminal device (10, 40), wherein a system frequency resource used by the communications system is divided into X subbands, and the method comprises:
determining, by the terminal device (10, 40), a first frequency resource, wherein Z subbands comprised in the first frequency resource are determined by the network device (20, 30) in a first time unit in Y subbands comprised in a second frequency resource, the second frequency resource is a downlink frequency resource allocated by the network device (20, 30) to the terminal device (10, 40), the Y subbands are comprised in the X subbands, and the second frequency resource corresponds to one piece of wideband channel state information, CSI, wherein X≥Y≥2, Y>Z≥1, and X, Y, and Z are all integers;
determining, by the terminal device (10, 40), the wideband CSI based on the first frequency resource; and
sending, by the terminal device (10, 40), the wideband CSI to the network device (20, 30) in a second time unit,
wherein the method further comprises:
determining, by the terminal device (10, 40), K1 pieces of first CSI and/or K2 pieces of second CSI based on the first frequency resource, wherein K1≥1 and K2≥1, the first CSI is CSI determined by the terminal device (10, 40) based on Z1 subbands in the Z subbands, Z>Z1≥1, the second CSI is CSI determined by the terminal device (10, 40) based on some downlink frequency resources comprised in one of the Z subbands, and K1, K2, and Z1 are all integers; and
sending, by the terminal device (10, 40), the K1 pieces of first CSI and/or the K2 pieces of second CSI to the network device (20, 30) in the second time unit.

2. The method according to claim 1, wherein the first frequency resource is a downlink frequency resource that is obtained by the network device (20, 30) through contention from the second frequency resource in the first time unit; or a downlink frequency resource that is scheduled by the network device (20, 30) from the second frequency resource to the terminal device (10, 40) in the first time unit.

3. The method according to claim 1 or 2, wherein the determining, by the terminal device (10, 40), a first frequency resource comprises:
blindly detecting, by the terminal device (10, 40), a reference signal in the first time unit, and determining the first frequency resource based on a frequency resource corresponding to the detected reference signal; and/or
receiving, by the terminal device (10, 40), first indication information sent by the network device (20, 30), and determining the first frequency resource according to the first indication information.

4. A method for measuring channel state information, applied to a communications system comprising a network device (20, 30) and a terminal device (10, 40), wherein a system frequency resource used by the communications system is divided into X subbands, and the method comprises:
determining, by the terminal device (10, 40), a first frequency resource, wherein Z subbands comprised in the first frequency resource are determined by the network device (20, 30) in a first time unit in Y subbands comprised in a second frequency resource, the second frequency resource is a downlink frequency resource allocated by the network device (20, 30) to the terminal device (10, 40), the Y subbands are comprised in the X subbands, and the second frequency resource corresponds to one piece of wideband channel state information, CSI, wherein X≥Y≥2, Y>Z≥1, and X, Y, and Z are all integers;
determining, by the terminal device (10, 40), the wideband CSI based on the first frequency resource; and
sending, by the terminal device (10, 40), the wideband CSI to the network device (20, 30) in a second time unit,
wherein the method further comprises:
determining, by the terminal device (10, 40), a third frequency resource, wherein the third frequency resource comprises W subbands, the W subbands are comprised in subbands that are in the second frequency resource and that are different from those in the first frequency resource, Y-Z≥W≥1, and W is an integer;
determining, by the terminal device (10, 40), P pieces of third CSI corresponding to the third frequency resource, wherein P≥1, and P is an integer; and
sending, by the terminal device (10, 40), the P pieces of third CSI to the network device (20, 30) in the second time unit.

5. The method according to claim 4, wherein
at least one of the P pieces of third CSI is a preset value; and/or
at least one of the P pieces of third CSI is determined by the terminal device (10, 40) based on a fourth frequency resource, and the fourth frequency resource is a downlink frequency resource that is determined by the terminal device (10, 40) before the first time unit and that is comprised in the third frequency resource in the first time unit.

6. A method for measuring channel state information, applied to a communications system comprising a network device (20, 30) and a terminal device (10, 40), wherein a system frequency resource used by the communications system is divided into X subbands, and the method comprises:
allocating, by the network device (20, 30), a second frequency resource to the terminal device (10, 40), wherein the second frequency resource comprises Y subbands in the X subbands, the Y subbands are used for downlink transmission, and the second frequency resource corresponds to one piece of wideband channel state information, CSI;
determining, by the network device (20, 30) in a first time unit, Z subbands comprised in a first frequency resource in the Y subbands; and
receiving, by the network device (20, 30) in a second time unit, the wideband CSI sent by the terminal device (10, 40), wherein the wideband CSI is CSI determined by the terminal device (10, 40) based on the first frequency resource, X≥Y≥2, Y>Z≥1, and X, Y, and Z are all integers,
wherein the method further comprises:
receiving, by the network device (20, 30) in the second time unit, K1 pieces of first CSI and/or K2 pieces of second CSI sent by the terminal device (10, 40), wherein K1≥1 and K2≥1, the first CSI is CSI determined by the terminal device (10, 40) based on Z1 subbands in the Z subbands, Z>Z1≥1, the second CSI is CSI determined by the terminal device (10, 40) based on some downlink frequency resources comprised in one of the Z subbands, and K1, K2, and Z1 are all integers.

7. The method according to claim 6, wherein the method further comprises:
obtaining, by the network device (20, 30) through contention, the first frequency resource from the second frequency resource in the first time unit; or
determining, by the network device (20, 30), to schedule the first frequency resource from the second frequency resource to the terminal device (10, 40) in the first time unit.

8. A method for measuring channel state information, applied to a communications system comprising a network device (20, 30) and a terminal device (10, 40), wherein a system frequency resource used by the communications system is divided into X subbands, and the method comprises:
allocating, by the network device (20, 30), a second frequency resource to the terminal device (10, 40), wherein the second frequency resource comprises Y subbands in the X subbands, the Y subbands are used for downlink transmission, and the second frequency resource corresponds to one piece of wideband channel state information, CSI;
determining, by the network device (20, 30) in a first time unit, Z subbands comprised in a first frequency resource in the Y subbands; and
receiving, by the network device (20, 30) in a second time unit, the wideband CSI sent by the terminal device (10, 40), wherein the wideband CSI is CSI determined by the terminal device (10, 40) based on the first frequency resource, X≥Y≥2, Y>Z≥1, and X, Y, and Z are all integers,
wherein the method further comprises:
receiving, by the network device (20, 30) in the second time unit, P pieces of third CSI sent by the terminal device (10, 40), wherein P≥1, the P pieces of third CSI are CSI corresponding to a third frequency resource, the third frequency resource comprises W subbands, the W subbands are comprised in subbands that are in the second frequency resource and that are different from those in the first frequency resource, Y-Z≥W≥1, and P and W are both integers.

9. The method according to claim 8, wherein
at least one of the P pieces of third CSI is a preset value; and/or
at least one of the P pieces of third CSI is determined by the terminal device (10, 40) based on a fourth frequency resource, and the fourth frequency resource is a downlink frequency resource that is determined by the terminal device (10, 40) before the first time unit and that is comprised in the third frequency resource in the first time unit.

10. The method according to claim 7, wherein the method further comprises:
receiving, by the network device (20, 30) in a fourth time unit, fifth CSI sent by the terminal device (10, 40), wherein the fifth CSI is CSI that corresponds to a fifth frequency resource and that is determined by the terminal device (10, 40) based on fourth CSI and the fifth frequency resource, the fifth frequency resource is a frequency resource determined by the network device (20, 30) in the second frequency resource in a third time unit, and the third time unit is a time unit after the first time unit.

11. An apparatus for measuring channel state information, applied to a communication apparatus and comprising units configured to perform the steps according to any one of claims 1 to 5.

12. An apparatus for measuring channel state information, applied to a communication apparatus and comprising units configured to perform the steps according to any one of claims 6 to 10.

13. A computer-readable storage medium, comprising an instruction, wherein when the instruction is run on a computer, the computer is enabled to perform the method according to any one of claims 1 to 10.

## Patentansprüche

1. Verfahren zum Messen von Kanalzustandsinformationen, das auf ein Kommunikationssystem, das ein Netzgerät (20, 30) und ein Endgerät (10, 40) umfasst, angewendet wird, wobei eine von dem Kommunikationssystem genutzte Systemfrequenzressource in X Teilbänder aufgeteilt ist und das Verfahren Folgendes umfasst:
Bestimmen einer ersten Frequenzressource durch das Endgerät (10, 40), wobei Z Teilbänder, die in der ersten Frequenzressource umfasst sind, durch das Netzgerät (20, 30) in einer ersten Zeiteinheit in Y Teilbändern, die in einer zweiten Frequenzressource umfasst sind, bestimmt werden, die zweite Frequenzressource eine durch das Netzgerät (20, 30) dem Endgerät (10, 40) zugeteilte Abwärtsfrequenzressource ist, die Y Teilbänder in den X Teilbändern umfasst sind und die zweite Frequenzressource einer Breitband-Kanalzustandsinformation, Breitband-CSI, entspricht, wobei X≥Y≥2 und Y>Z≥1 gilt und X, Y und Z jeweils ganze Zahlen sind;
Bestimmen der Breitband-CSI basierend auf der ersten Frequenzressource durch das Endgerät (10, 40); und
Senden der Breitband-CSI durch das Endgerät (10, 40) an das Netzgerät (20, 30) in einer zweiten Zeiteinheit;
wobei das Verfahren ferner Folgendes umfasst:
Bestimmen von K1 ersten CSI und/oder K2 zweiten CSI basierend auf der ersten Frequenzressource durch das Endgerät (10, 40), wobei K1≥1 und K2≥1 gilt, die ersten CSI CSI sind, die basierend auf Z1 Teilbändern in den Z Teilbändern durch das Endgerät (10, 40) bestimmt werden, Z>Z1≥1 gilt, die zweiten CSI CSI sind, die basierend auf einigen Abwärtsfrequenzressourcen, die in einem der Z Teilbänder umfasst sind, durch das Endgerät (10, 40) bestimmt werden, und K1, K2 und Z1 jeweils ganze Zahlen sind; und
Senden der K1 ersten CSI und/oder der K2 zweiten CSI durch das Endgerät (10, 40) an das Netzgerät (20, 30) in der zweiten Zeiteinheit.

2. Verfahren nach Anspruch 1, wobei die erste Frequenzressource eine Abwärtsfrequenzressource ist, die durch das Netzgerät (20, 30) durch einen Konflikt von der zweiten Frequenzressource in der ersten Zeiteinheit erhalten wird; oder eine Abwärtsfrequenzressource, die einem "Scheduling" durch das Netzgerät (20, 30) von der zweiten Frequenzressource an das Endgerät (10, 40) in der ersten Zeiteinheit unterzogen wird.

3. Verfahren nach Anspruch 1 oder 2, wobei das Bestimmen einer ersten Frequenzressource durch das Endgerät (10, 40) Folgendes umfasst:
blindes Detektieren eines Referenzsignals in der ersten Zeiteinheit durch das Endgerät (10, 40) und Bestimmen der ersten Frequenzressource basierend auf einer Frequenzressource, die dem detektierten Referenzsignal entspricht; und/oder Empfangen erster Angabe-Informationen, die durch das Netzgerät (20, 30) gesendet werden, durch das Endgerät (10, 40) und Bestimmen der ersten Frequenzressource gemäß den ersten Angabe-Informationen.

4. Verfahren zum Messen von Kanalzustandsinformationen, das auf ein Kommunikationssystem, das ein Netzgerät (20, 30) und ein Endgerät (10, 40) umfasst, angewendet wird, wobei eine von dem Kommunikationssystem genutzte Systemfrequenzressource in X Teilbänder aufgeteilt ist und das Verfahren Folgendes umfasst:
Bestimmen einer ersten Frequenzressource durch das Endgerät (10, 40), wobei Z Teilbänder, die in der ersten Frequenzressource umfasst sind, durch das Netzgerät (20, 30) in einer ersten Zeiteinheit in Y Teilbändern, die in einer zweiten Frequenzressource umfasst sind, bestimmt werden, die zweite Frequenzressource eine durch das Netzgerät (20, 30) dem Endgerät (10, 40) zugeteilte Abwärtsfrequenzressource ist, die Y Teilbänder in den X Teilbändern umfasst sind und die zweite Frequenzressource einer Breitband-Kanalzustandsinformation, Breitband-CSI, entspricht, wobei X≥Y≥2 und Y>Z≥1 gilt und X, Y und Z jeweils ganze Zahlen sind;
Bestimmen der Breitband-CSI basierend auf der ersten Frequenzressource durch das Endgerät (10, 40); und
Senden der Breitband-CSI durch das Endgerät (10, 40) an das Netzgerät (20, 30) in einer zweiten Zeiteinheit,
wobei das Verfahren ferner Folgendes umfasst:
Bestimmen einer dritten Frequenzressource durch das Endgerät (10, 40), wobei die dritte Frequenzressource W Teilbänder umfasst, die W Teilbänder in Teilbändern, die in der zweiten Frequenzressource sind und die sich von denjenigen in der ersten Frequenzressource unterscheiden, umfasst sind, Y-Z≥W≥1 gilt und W eine ganze Zahl ist;
Bestimmen von P dritten CSI, die der dritten Frequenzressource entsprechen, durch das Endgerät (10, 40), wobei P≥1 gilt und P eine ganze Zahl ist; und
Senden der P dritten CSI durch das Endgerät (10, 40) an das Netzgerät (20, 30) in der zweiten Zeiteinheit.

5. Verfahren nach Anspruch 4, wobei
mindestens eine der P dritten CSI ein vorgegebener Wert ist; und/oder
mindestens eine der P dritten CSI basierend auf einer vierten Frequenzressource durch das Endgerät (10, 40) bestimmt wird und die vierte Frequenzressource eine Abwärtsfrequenzressource ist, die vor der ersten Zeiteinheit durch das Endgerät (10, 40) bestimmt wird und die in der dritten Frequenzressource in der ersten Zeiteinheit umfasst ist.

6. Verfahren zum Messen von Kanalzustandsinformationen, das auf ein Kommunikationssystem, das ein Netzgerät (20, 30) und ein Endgerät (10, 40) umfasst, angewendet wird, wobei eine von dem Kommunikationssystem genutzte Systemfrequenzressource in X Teilbänder aufgeteilt ist und das Verfahren Folgendes umfasst:
Zuteilen einer zweiten Frequenzressource durch das Netzgerät (20, 30) an das Endgerät (10, 40), wobei die zweite Frequenzressource Y Teilbänder in den X Teilbändern umfasst, die Y Teilbänder für eine Abwärtsübertragung genutzt werden und die zweite Frequenzressource einer Breitband-Kanalzustandsinformation, Breitband-CSI, entspricht;
Bestimmen von Z Teilbändern, die in einer ersten Frequenzressource in den Y Teilbändern umfasst sind, durch das Netzgerät (20, 30) in einer ersten Zeiteinheit; und
Empfangen der durch das Endgerät (10, 40) gesendeten Breitband-CSI durch das Netzgerät (20, 30) in einer zweiten Zeiteinheit, wobei die Breitband-CSI CSI sind, die basierend auf der ersten Frequenzressource durch das Endgerät (10, 40) bestimmt werden, X≥Y≥2 und Y>Z≥1 gilt und X, Y und Z jeweils ganze Zahlen sind,
wobei das Verfahren ferner Folgendes umfasst:
Empfangen von K1 ersten CSI und/oder K2 zweiten CSI, die durch das Endgerät (10, 40) gesendet werden, durch das Netzgerät (20, 30) in der zweiten Zeiteinheit, wobei K1≥1 und K2≥1 gilt, die ersten CSI CSI sind, die basierend auf Z1 Teilbändern in den Z Teilbändern durch das Endgerät (10, 40) bestimmt werden, Z>Z1≥1 gilt, die zweiten CSI CSI sind, die basierend auf einigen Abwärtsfrequenzressourcen, die in einem der Z Teilbänder umfasst sind, durch das Endgerät (10, 40) bestimmt werden, und K1, K2 und Z1 jeweils ganze Zahlen sind.

7. Verfahren nach Anspruch 6, wobei das Verfahren ferner Folgendes umfasst:
Erhalten der ersten Frequenzressource von der zweiten Frequenzressource in der ersten Zeiteinheit durch das Netzgerät (20, 30) durch einen Konflikt; oder
Bestimmen durch das Netzgerät (20, 30), dass die erste Frequenzressource einem "Scheduling" von der zweiten Frequenzressource an das Endgerät (10, 40) in der ersten Zeiteinheit unterzogen wird.

8. Verfahren zum Messen von Kanalzustandsinformationen, das auf ein Kommunikationssystem, das ein Netzgerät (20, 30) und ein Endgerät (10, 40) umfasst, angewendet wird, wobei eine von dem Kommunikationssystem genutzte Systemfrequenzressource in X Teilbänder aufgeteilt ist und das Verfahren Folgendes umfasst:
Zuteilen einer zweiten Frequenzressource durch das Netzgerät (20, 30) an das Endgerät (10, 40), wobei die zweite Frequenzressource Y Teilbänder in den X Teilbändern umfasst, die Y Teilbänder für eine Abwärtsübertragung genutzt werden und die zweite Frequenzressource einer Breitband-Kanalzustandsinformation, Breitband-CSI, entspricht;
Bestimmen von Z Teilbändern, die in einer ersten Frequenzressource in den Y Teilbändern umfasst sind, durch das Netzgerät (20, 30) in einer ersten Zeiteinheit; und
Empfangen der durch das Endgerät (10, 40) gesendeten Breitband-CSI durch das Netzgerät (20, 30) in einer zweiten Zeiteinheit, wobei die Breitband-CSI CSI sind, die basierend auf der ersten Frequenzressource durch das Endgerät (10, 40) bestimmt werden, X≥Y≥2 und Y>Z≥1 gilt und X, Y und Z jeweils ganze Zahlen sind,
wobei das Verfahren ferner Folgendes umfasst:
Empfangen von P dritten CSI, die durch das Endgerät (10, 40) gesendet werden, durch das Netzgerät (20, 30) in der zweiten Zeiteinheit, wobei P≥1 gilt, die P dritten CSI CSI sind, die einer dritten Frequenzressource entsprechen, die dritte Frequenzressource W Teilbänder umfasst, die W Teilbänder in Teilbändern, die in der zweiten Frequenzressource sind und die sich von denjenigen in der ersten Frequenzressource unterscheiden, umfasst sind, Y-Z≥W≥1 gilt und sowohl P als auch W ganze Zahlen sind.

9. Verfahren nach Anspruch 8, wobei
mindestens eine der P dritten CSI ein vorgegebener Wert ist; und/oder
mindestens eine der P dritten CSI basierend auf einer vierten Frequenzressource durch das Endgerät (10, 40) bestimmt wird und die vierte Frequenzressource eine Abwärtsfrequenzressource ist, die vor der ersten Zeiteinheit durch das Endgerät (10, 40) bestimmt wird und die in der dritten Frequenzressource in der ersten Zeiteinheit umfasst ist.

10. Verfahren nach Anspruch 7, wobei das Verfahren ferner Folgendes umfasst:
Empfangen fünfter CSI, die durch das Endgerät (10, 40) gesendet werden, durch das Netzgerät (20, 30) in einer vierten Zeiteinheit, wobei die fünften CSI CSI sind, die einer fünften Frequenzressource entsprechen und die basierend auf vierten CSI und der fünften Frequenzressource durch das Endgerät (10, 40) bestimmt werden, die fünfte Frequenzressource eine Frequenzressource ist, die durch das Netzgerät (20, 30) in der zweiten Frequenzressource in einer dritten Zeiteinheit bestimmt wird, und die dritte Zeiteinheit eine Zeiteinheit nach der ersten Zeiteinheit ist.

11. Vorrichtung zum Messen von Kanalzustandsinformationen, die auf eine Kommunikationsvorrichtung angewendet wird und Einheiten umfasst, die konfiguriert sind, um die Schritte nach einem der Ansprüche 1 bis 5 durchzuführen.

12. Vorrichtung zum Messen von Kanalzustandsinformationen, die auf eine Kommunikationsvorrichtung angewendet wird und Einheiten umfasst, die konfiguriert sind, um die Schritte nach einem der Ansprüche 6 bis 10 durchzuführen.

13. Computerlesbares Speichermedium, das eine Anweisung umfasst, wobei, sobald die Anweisung auf einem Computer abgearbeitet wird, ermöglicht wird, dass der Computer das Verfahren nach einem der Ansprüche 1 bis 10 durchführt.

## Revendications

1. Procédé de mesure d'informations d'état de canal, appliqué à un système de communications comportant un dispositif (20, 30) de réseau et un dispositif terminal (10, 40), une ressource de fréquence de système utilisée par le système de communications étant divisée en X sous-bandes, et le procédé comportant :
la détermination, par le dispositif terminal (10, 40), d'une première ressource de fréquence, Z sous-bandes comprises dans la première ressource de fréquence étant déterminées par le dispositif (20, 30) de réseau dans une première unité de temps dans Y sous-bandes comprises dans une deuxième ressource de fréquence, la deuxième ressource de fréquence étant une ressource de fréquence en liaison descendante attribuée par le dispositif (20, 30) de réseau au dispositif terminal (10, 40), les Y sous-bandes étant comprises dans les X sous-bandes, et la deuxième ressource de fréquence correspondant à un élément d'informations d'état de canal, CSI, à large bande, avec X≥Y≥2, Y>Z≥1, et X, Y, et Z étant tous des entiers ;
la détermination, par le dispositif terminal (10, 40), des CSI à large bande d'après la première ressource de fréquence ; et
l'envoi, par le dispositif terminal (10, 40), des CSI à large bande au dispositif (20, 30) de réseau dans une deuxième unité de temps,
le procédé comportant en outre :
la détermination, par le dispositif terminal (10, 40), de K1 éléments de premières CSI et/ou de K2 éléments de deuxièmes CSI d'après la première ressource de fréquence, avec K1≥1 et K2≥1, les premières CSI étant des CSI déterminées par le dispositif terminal (10, 40) d'après Z1 sous-bandes parmi les Z sous-bandes, Z>Z1≥1, les deuxièmes CSI étant des CSI déterminées par le dispositif terminal (10, 40) d'après certaines ressources de fréquence en liaison descendante comprises dans une des Z sous-bandes, et K1, K2, et Z1 étant tous des entiers ; et
l'envoi, par le dispositif terminal (10, 40), des K1 éléments de premières CSI et/ou des K2 éléments de deuxièmes CSI au dispositif (20, 30) de réseau dans la deuxième unité de temps.

2. Procédé selon la revendication 1, la première ressource de fréquence étant une ressource de fréquence en liaison descendante qui est obtenue par concurrence par le dispositif (20, 30) de réseau à partir de la deuxième ressource de fréquence dans la première unité de temps ; ou une ressource de fréquence en liaison descendante qui est programmée par le dispositif (20, 30) de réseau de la deuxième ressource de fréquence vers le dispositif terminal (10, 40) dans la première unité de temps.

3. Procédé selon la revendication 1 ou 2, la détermination, par le dispositif terminal (10, 40), d'une première ressource de fréquence comportant :
la détection en aveugle, par le dispositif terminal (10, 40), d'un signal de référence dans la première unité de temps, et la détermination de la première ressource de fréquence d'après une ressource de fréquence correspondant au signal de référence détecté ; et/ou
la réception, par le dispositif terminal (10, 40), de premières informations d'indication émises par le dispositif (20, 30) de réseau, et la détermination de la première ressource de fréquence selon les premières informations d'indication.

4. Procédé de mesure d'informations d'état de canal, appliqué à un système de communications comportant un dispositif (20, 30) de réseau et un dispositif terminal (10, 40), une ressource de fréquence de système utilisée par le système de communications étant divisée en X sous-bandes, et le procédé comportant :
la détermination, par le dispositif terminal (10, 40), d'une première ressource de fréquence, Z sous-bandes comprises dans la première ressource de fréquence étant déterminées par le dispositif (20, 30) de réseau dans une première unité de temps dans Y sous-bandes comprises dans une deuxième ressource de fréquence, la deuxième ressource de fréquence étant une ressource de fréquence en liaison descendante attribuée par le dispositif (20, 30) de réseau au dispositif terminal (10, 40), les Y sous-bandes étant comprises dans les X sous-bandes, et la deuxième ressource de fréquence correspondant à un élément d'informations d'état de canal, CSI, à large bande, avec X≥Y≥2, Y>Z≥1, et X, Y, et Z étant tous des entiers ;
la détermination, par le dispositif terminal (10, 40), des CSI à large bande d'après la première ressource de fréquence ; et
l'envoi, par le dispositif terminal (10, 40), des CSI à large bande au dispositif (20, 30) de réseau dans une deuxième unité de temps,
le procédé comportant en outre :
la détermination, par le dispositif terminal (10, 40), d'une troisième ressource de fréquence, la troisième ressource de fréquence comportant W sous-bandes, les W sous-bandes étant comprises dans des sous-bandes qui se trouvent dans la deuxième ressource de fréquence et qui sont différentes de celles dans la première ressource de fréquence, Y-Z≥W≥1, et W étant un entier ;
la détermination, par le dispositif terminal (10, 40), de P éléments de troisièmes CSI correspondant à la troisième ressource de fréquence, avec P≥1, et P étant un entier ; et
l'envoi, par le dispositif terminal (10, 40), des P éléments de troisièmes CSI au dispositif (20, 30) de réseau dans la deuxième unité de temps.

5. Procédé selon la revendication 4, au moins un des P éléments de troisièmes CSI étant une valeur préétablie ; et/ou
au moins un des P éléments de troisièmes CSI étant déterminé par le dispositif terminal (10, 40) d'après une quatrième ressource de fréquence, et la quatrième ressource de fréquence étant une ressource de fréquence en liaison descendante qui est déterminée par le dispositif terminal (10, 40) avant la première unité de temps et qui est comprise dans la troisième ressource de fréquence dans la première unité de temps.

6. Procédé de mesure d'informations d'état de canal, appliqué à un système de communications comportant un dispositif (20, 30) de réseau et un dispositif terminal (10, 40), une ressource de fréquence de système utilisée par le système de communications étant divisée en X sous-bandes, et le procédé comportant :
l'attribution, par le dispositif (20, 30) de réseau, d'une deuxième ressource de fréquence au dispositif terminal (10, 40), la deuxième ressource de fréquence comportant Y sous-bandes parmi les X sous-bandes, les Y sous-bandes étant utilisées pour une transmission en liaison descendante, et la deuxième ressource de fréquence correspondant à un élément d'informations d'état de canal, CSI, à large bande ;
la détermination, par le dispositif (20, 30) de réseau dans une première unité de temps, de Z sous-bandes comprises dans une première ressource de fréquence dans les Y sous-bandes ; et
la réception, par le dispositif (20, 30) de réseau dans une deuxième unité de temps, des CSI à large bande émises par le dispositif terminal (10, 40), les CSI à large bande étant des CSI déterminées par le dispositif terminal (10, 40) d'après la première ressource de fréquence, X≥Y≥2, Y>Z≥1, et X, Y, et Z étant tous des entiers,
le procédé comportant en outre :
la réception, par le dispositif (20, 30) de réseau dans la deuxième unité de temps, de K1 éléments de premières CSI et/ou de K2 éléments de deuxièmes CSI émis par le dispositif terminal (10, 40), avec K1≥1 et K2≥1, les premières CSI étant des CSI déterminées par le dispositif terminal (10, 40) d'après Z1 sous-bandes parmi les Z sous-bandes, Z>Z1≥1, les deuxièmes CSI étant des CSI déterminées par le dispositif terminal (10, 40) d'après certaines ressources de fréquence en liaison descendante comprises dans une des Z sous-bandes, et K1, K2, et Z1 étant tous des entiers.

7. Procédé selon la revendication 6, le procédé comportant en outre :
l'obtention par concurrence, par le dispositif (20, 30) de réseau, de la première ressource de fréquence à partir de la deuxième ressource de fréquence dans la première unité de temps ; ou
la détermination, par le dispositif (20, 30) de réseau, du fait qu'il convient de programmer la première ressource de fréquence de la deuxième ressource de fréquence vers le dispositif terminal (10, 40) dans la première unité de temps.

8. Procédé de mesure d'informations d'état de canal, appliqué à un système de communications comportant un dispositif (20, 30) de réseau et un dispositif terminal (10, 40), une ressource de fréquence de système utilisée par le système de communications étant divisée en X sous-bandes, et le procédé comportant :
l'attribution, par le dispositif (20, 30) de réseau, d'une deuxième ressource de fréquence au dispositif terminal (10, 40), la deuxième ressource de fréquence comportant Y sous-bandes parmi les X sous-bandes, les Y sous-bandes étant utilisées pour une transmission en liaison descendante, et la deuxième ressource de fréquence correspondant à un élément d'informations d'état de canal, CSI, à large bande ;
la détermination, par le dispositif (20, 30) de réseau dans une première unité de temps, de Z sous-bandes comprises dans une première ressource de fréquence dans les Y sous-bandes ; et
la réception, par le dispositif (20, 30) de réseau dans une deuxième unité de temps, des CSI à large bande émises par le dispositif terminal (10, 40), les CSI à large bande étant des CSI déterminées par le dispositif terminal (10, 40) d'après la première ressource de fréquence, X≥Y≥2, Y>Z≥1, et X, Y, et Z étant tous des entiers,
le procédé comportant en outre :
la réception, par le dispositif (20, 30) de réseau dans la deuxième unité de temps, de P éléments de troisièmes CSI émis par le dispositif terminal (10, 40), avec P≥1, les P éléments de troisièmes CSI étant des CSI correspondant à une troisième ressource de fréquence, la troisième ressource de fréquence comportant W sous-bandes, les W sous-bandes étant comprises dans des sous-bandes qui se trouvent dans la deuxième ressource de fréquence et qui sont différentes de celles dans la première ressource de fréquence, Y-Z≥W≥1, et P et W étant tous deux des entiers.

9. Procédé selon la revendication 8, au moins un des P éléments de troisièmes CSI étant une valeur préétablie ; et/ou
au moins un des P éléments de troisièmes CSI étant déterminé par le dispositif terminal (10, 40) d'après une quatrième ressource de fréquence, et la quatrième ressource de fréquence étant une ressource de fréquence en liaison descendante qui est déterminée par le dispositif terminal (10, 40) avant la première unité de temps et qui est comprise dans la troisième ressource de fréquence dans la première unité de temps.

10. Procédé selon la revendication 7, le procédé comportant en outre :
la réception, par le dispositif (20, 30) de réseau dans une quatrième unité de temps, de cinquièmes CSI émises par le dispositif terminal (10, 40), les cinquièmes CSI étant des CSI qui correspondent à une cinquième ressource de fréquence et qui sont déterminées par le dispositif terminal (10, 40) d'après des quatrièmes CSI et la cinquième ressource de fréquence, la cinquième ressource de fréquence étant une ressource de fréquence déterminée par le dispositif (20, 30) de réseau dans la deuxième ressource de fréquence dans une troisième unité de temps, et la troisième unité de temps étant une unité de temps postérieure à la première unité de temps.

11. Appareil de mesure d'informations d'état de canal, appliqué à un appareil de communication et comportant des unités configurées pour réaliser les étapes selon l'une quelconque des revendications 1 à 5.

12. Appareil de mesure d'informations d'état de canal, appliqué à un appareil de communication et comportant des unités configurées pour réaliser les étapes selon l'une quelconque des revendications 6 à 10.

13. Support de stockage lisible par ordinateur, comportant une instruction, lorsque l'instruction est exécutée sur un ordinateur, l'ordinateur étant rendu apte à réaliser le procédé selon l'une quelconque des revendications 1 à 10.
